(19) **Europäisches Patentamt European Patent Office Office européen des brevets**

(11) **EP 4 576 840 B1**

(12) **EUROPEAN PATENT SPECIFICATION**

(45) Date of publication and mention
of the grant of the patent:
**08.07.2026 Bulletin 2026/28**

(51) International Patent Classification (IPC):
***H04W 4/021*** (2018.01)  ***H04W 4/029*** (2018.01)
***G06F 17/17*** (2006.01)  ***G08G 3/00*** (2006.01)

(21) Application number: **24211748.9**

(52) Cooperative Patent Classification (CPC):
**H04W 4/029; G06F 17/17; G08G 3/00; H04W 4/021**

(22) Date of filing: **08.11.2024**

(54) **GEOFENCE BREAK DETECTION**

GEOFENCE DURCHBRUCH-DETEKTION

DÉTECTION DE FRANCHISSEMENT DE GÉOREPÉRAGE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **18.12.2023 US 202318543851
18.12.2023 US 202318543907**

(43) Date of publication of application:
**25.06.2025 Bulletin 2025/26**

(73) Proprietor: **S&P Global Inc.
New York, New York 10041 (US)**

(72) Inventors:
• **Parker, Barnaby
San Franciso (US)**
• **Krabel, Julian
Ostroleka (PL)**
• **Reddish, Garrett
Florida (US)**

(74) Representative: **Barker Brettell LLP
100 Hagley Road
Edgbaston
Birmingham B16 8QQ (GB)**

(56) References cited:
**US-A1- 2011 148 634    US-B2- 11 526 536
US-B2- 7 564 404**

**Description**

**1. Field**

The present disclosure relates generally to tracking and communications system, and more specifically to vessel tracking services.

**2. Background**

Tracking systems such as Automatic Identification System (AIS) allow ships and other vessels to exchange real-time information such as identity, position, course, heading, and speed. Transceivers onboard ships transmit this information, which can be received by other vessels, shore-based stations, and satellites. Such tracking systems allow vessels and authorities to monitor vessel movements and reduce the risk of collisions at sea by improving situational awareness.

Tracking systems such as AIS can be used in conjunction with geofencing technology. Geofencing comprises the creation of virtual geographic boundaries or zones defined around a specific geographic area such as a city or port. Geofencing utilizes location-based communications technologies such as GPS (Global Positioning System), RFID (radiofrequency identification), cellular data, etc., to trigger actions when an object such as a vessel enters or exits the area encompassed by a geofence.

US 11,526,536 discloses an artificial intelligence systems and methods for identifying grids for a geofence in an area in a map that includes a plurality of independently indexed regions of grids. The map is gridded into a plurality of grids and divided into a plurality of partitions. The methods include obtaining information of the geofence in the map, and determining a boundary grid series of the geofence from the plurality of grids. The methods include identifying at least one enclosed area in the geographical region, and upon determining that an enclosed area crosses two or more partitions, segmenting the enclosed area into two or more sub-areas. The methods also include determining boundary grids for each sub-area, and identifying internal grids in the sub-area for each sub-area. The methods further include identifying grids in the geographical region by collecting the boundary grids and the internal grids.

US 2011/148635 discloses a geofence system that predicts a geofence crossing for a distance-horizon and/or a time-horizon. The predictive geofence system includes a predictive geofence platform that predicts future positions of objects, and generates an alert if the predicted future positions of the objects result in a geofence crossing or the predicted future positions cross a geofence in less than a set time.

US 7,564,404 discloses a device and method for precisely determining the direction and distance to a satellite radio beacon. In one embodiment, the disclosed device is used for SAR (search and rescue) of people in distress, upon activation of an emergency radio beacon, such as a marine EPIRB (Emergency Position Indicating Radio Beacon) or an airborne ELT (Emergency Locator Transmitter) or a terrestrial PLB (Personal Location Beacon) or a marine SSAS (Ship Security Alert System) beacon, beacons which are part of the Cospas-Sarsat system.

**3. Summary**

According to a first aspect of the invention, there is provided a computer-implemented method of detecting geofence break events. The method comprises defining a geofence boundary according to a triangle comprising a first segment between a first vertex at the center of the earth and a second vertex above the earth's surface, a second segment between the first vertex and a third vertex above the earth's surface, and a third segment between the second and third vertices, wherein the third segment remains above the earth's surface at the segment midpoint. The geofence boundary is defined by a first vector between respective intersection points of the first and second segments with the earth's surface, wherein the first vector represents a great arc when projected to the curvature of the earth's surface. Origin coordinates and destination coordinates for a vehicle are received, wherein a second vector between the origin coordinates and destination coordinates represent a great arc defining a path of the vehicle when projected to the curvature of the earth's surface. The method determines whether the second vector intersects the plane defined by the triangle, wherein an intersection of the plane represents a geofence break. Responsive to a determination that the second vector intersects the plane, a geofence break event notice is sent to a number of downstream consumers.

The triangle may be one of three or more triangles that define respective geofence boundaries enclosing a geofenced area on the earth's surface.

The method may further comprise defining a buffer zone around the geofenced area, wherein the buffer zone comprises outer boundaries that match the geofenced area in contour.

A geofence break event notice may be sent only when the path of the vehicle intersects both a geofence boundary of the geofenced area and an outer boundary of the buffer zone.

A number of the geofence boundaries may fall within multiple spatial bins on the earth's surface. the spatial bins may be defined by a global three-dimensional mesh of polyhedrons.

The method may further comprise, responsive to a determination that the origin coordinates and destination coordinates are located within a single spatial bin, testing only geofence boundaries within that spatial bin for intersection with the path of the vehicle.

The method may further comprise, responsive to a determination that the origin coordinates and destination coordinates are located in different spatial bins, testing all geofence boundaries for intersection with the path of the vehicle.

The method may further comprise reducing the coordinates of all points falling within a given spatial bin to a single shared identifying key value according to a deterministic function. The origin coordinates and destination coordinates of the vehicle may be translated into a key value to retrieve geofence boundaries associated with the spatial bin that maps to that key value in a lookup-optimized data structure.

The method may further comprise converting the true latitude or longitude into grid normalized latitude or longitude to match the edges of the spatial bins to the curvature of the earth.

According to a second aspect of the invention, there is provided a system for detecting geofence break events. The system comprises a storage device that stores program instructions and one or more processors operably connected to the storage device and configured to execute the program instructions to cause the system to: define a geofence boundary according to a triangle comprising: a first segment between a first vertex at the center of the earth and a second vertex above the earth's surface; a second segment between the first vertex and a third vertex above the earth's surface; and a third segment between the second and third vertices, wherein the third segment remains above the earth's surface at the segment midpoint; wherein the geofence boundary is defined by a first vector between respective intersection points of the first and second segments with the earth's surface, wherein the first vector represents a great arc when projected to the curvature of the earth's surface; receive origin coordinates and destination coordinates for a vehicle, wherein a second vector between the origin coordinates and destination coordinates represent a great arc defining a path of the vehicle when projected to the curvature of the earth's surface; determine whether the second vector intersects the plane defined by the triangle, wherein an intersection of the plane represents a geofence break; and responsive to a determination that the second vector intersects the plane, send a geofence break event notice to a number of downstream consumers.

The triangle may be one of three or more triangles that define respective geofence boundaries enclosing a geofenced area on the earth's surface.

The processors may further execute instructions to define a buffer zone around the geofenced area. The buffer zone may comprise outer boundaries that match the geofenced area in contour.

A geofence break event notice may be sent only when the path of the vehicle intersects both a geofence boundary of the geofenced area and an outer boundary of the buffer zone.

A number of the geofence boundaries may fall within multiple spatial bins on the earth's surface. The spatial bins may be defined by a global three-dimensional mesh of polyhedrons.

The processors may further execute instructions to, responsive to a determination that the origin coordinates and destination coordinates are located within a single spatial bin, test only geofence boundaries within that spatial bin for intersection with the path of the vehicle.

The processors may further execute instructions to, responsive to a determination that the origin coordinates and destination coordinates are located in different spatial bins, test all geofence boundaries for intersection with the path of the vehicle.

The processors may further execute instructions to reduce the coordinates of all points falling within a given spatial bin to a single shared identifying key value according to a deterministic function, wherein the origin coordinates and destination coordinates of the vehicle are translated into a key value to retrieve geofence boundaries associated with the spatial bin that maps to that key value in a lookup-optimized data structure.

The processors may further execute instructions to convert the true latitude or longitude into grid normalized latitude or longitude to match the edges of the spatial bins to the curvature of the earth.

According to a third aspect of the invention, there is provided a computer program product for detecting geofence break events. The computer program product comprises a computer-readable storage medium having program instructions embodied thereon to perform the steps of: defining a geofence boundary according to a triangle comprising: a first segment between a first vertex at the center of the earth and a second vertex above the earth's surface; a second segment between the first vertex and a third vertex above the earth's surface; and a third segment between the second and third vertices, wherein the third segment remains above the earth's surface at the segment midpoint; wherein the geofence boundary is defined by a first vector between respective intersection points of the first and second segments with the earth's surface, wherein the first vector represents a great arc when projected to the curvature of the earth's surface; receiving origin coordinates and destination coordinates for a vehicle, wherein a second vector between the origin coordinates and destination coordinates represent a great arc defining a path of the vehicle when projected to the curvature of the earth's surface; determining whether the second vector intersects the plane defined by the triangle, wherein an intersection of the plane represents a geofence break; and responsive to a determination that the second vector intersects the plane, sending a geofence break event notice to a number of downstream consumers.

The triangle may be one of three or more triangles that define respective geofence boundaries enclosing a geofenced area on the earth's surface.

The computer program may further comprise instructions for defining a buffer zone around the geofenced area. The buffer zone may comprise outer boundaries that match the geofenced area in contour.

A geofence break event notice may be sent only when the path of the vehicle intersects both a geofence boundary of the geofenced area and an outer boundary of the buffer zone.

A number of the geofence boundaries may fall within multiple spatial bins on the earth's surface, wherein the spatial bins are defined by a global three-dimensional mesh of polyhedrons.

The computer program may further comprise instructions for, responsive to a determination that the origin coordinates and destination coordinates are located within a single spatial bin, testing only geofence boundaries within that spatial bin for intersection with the path of the vehicle.

The computer program may further comprise instructions for, responsive to a determination that the origin coordinates and destination coordinates are located in different spatial bins, testing all geofence boundaries for intersection with the path of the vehicle.

The computer program may further comprise instructions for reducing the coordinates of all points falling within a given spatial bin to a single shared identifying key value according to a deterministic function, wherein the origin coordinates and destination coordinates of the vehicle are translated into a key value to retrieve geofence boundaries associated with the spatial bin that maps to that key value in a lookup-optimized data structure.

The computer program may further comprise instructions for converting the true latitude or longitude into grid normalized latitude or longitude to match the edges of the spatial bins to the curvature of the earth.

## 4. Brief description of the drawings

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:

Figure 1 is a pictorial representation of a network of data processing systems in which illustrative embodiments may be implemented;

Figure 2 is a block diagram of a tracking and geofence system depicted in accordance with an illustrative embodiment;

Figure 3 depicts a pictorial diagram illustrating a stream of automatic identification system (AIS) data from a number of sources;

Figure 4 illustrates a number of data points representing positional updates of a vessel;

Figure 5 illustrates lines segments calculated from position update data points in accordance with an illustrative embodiment;

Figure 6 illustrates the calculation of line-point distances between N-dimensional points in accordance with an illustrative embodiment;

Figure 7 depicts a diagram illustrating the relationship between spatial displacement and time for vessel in accordance with an illustrative embodiment;

Figure 8 depicts a diagram illustrating time scaling in tracking vessel movements in accordance with an illustrative embodiment;

Figure 9 depicts a diagram illustrating speed dependence of time scaling;

Figure 10 depicts a diagram illustrating time scaling with position tolerance correction in accordance with an illustrative embodiment;

Figure 11 depicts a diagram illustrating a cylinder representing a spatial threshold around the path of a vessel in accordance with an illustrative embodiment;

Figure 12 depicts a diagram illustrating a geofenced area in accordance with an illustrative embodiment;

Figure 13 depicts a diagram illustrating high level geofence entry/exit detection in accordance with an illustrative embodiment;

Figure 14 depicts a diagram illustrating the different states of geofence ingress and egress in accordance with an illustrative embodiment;

Figure 15A depicts great arcs being evaluated for intersection in accordance with an illustrative embodiment;

Figure 15B illustrates an equivalent geometric construction to test for intersection of vessel path with a geofence edge in accordance with an illustrative embodiment;

Figure 16 depicts the projection of a geofenced area onto the earth's surface;

Figure 17A depicts the geofenced area 1200 as a geospatial volume originating at the center of the earth in accordance with an illustrative embodiment;

**Figure 17B** depicts an exploded view of the geospatial volume in **Figure 17A;**

**Figure 18A** depicts several geofenced areas stored in an unoptimized flat list;

**Figure 18B** depicts the application of spatial discretization and an associated lookup-optimized data structure to minimize the necessary geofence edge testing required to reliably detect a valid intersection in accordance with an illustrative embodiment;

**Figure 19A** illustrates simple spherical spatial discretization function's discretization of the earth's surface into discrete bins according to latitude and longitude;

**Figure 19B** illustrates 3D binning mesh geometry used to pre-compute geofence segment association with bins;

**Figure 19C** depicts a diagram illustrating the overlaid comparison of the latitude and longitude based spherical spatial discretization function binning in **Figure 19A** and the 3D binning mesh geometry in **Figure 19B;**

**Figure 20** depicts a diagram illustrating the disagreement in spatial alignment between straight edges of a 3D binning mesh geometry and lines of latitude delineating discretized areas in the spherical spatial discretization function;

**Figure 21** depicts in a 2D projection a diagram illustrating an example of an edge intersection scenario where spatial misalignment between a spherical spatial discretization function and a representative 3D binning mesh would result in a failure to detect a valid intersection;

**Figure 22A** illustrates in a 2D projection simple binning for the earth's surface according to a spherical spatial discretization function based on latitude and longitude;

**Figure 22B** illustrates in a 2D projection discrepancies resulting from projection of 3D binning mesh geometry projected into 2D when compared to a spherical spatial discretization function based on latitude and longitude;

**Figure 22C** illustrates a more advanced spherical spatial discretization function that incorporates corrections to align with 3D binning mesh geometry in accordance with an illustrative embodiment;

**Figure 23** depicts a flowchart illustrating a process for dynamically down sampling tracking data;

**Figure 24** depicts a flowchart for a process of detecting geofence break events in accordance with an illustrative embodiment;

**Figure 25** depicts a flowchart for a process of implementing a geofence buffer zone in accordance with an illustrative embodiment;

**Figure 26** depicts a flowchart for a process of geospatial binning in accordance with an illustrative embodiment; and

**Figure 27** is a block diagram of a data processing system in accordance with an illustrative embodiment.

## 5. Detailed description

The illustrative embodiments recognize and take into account that maritime vessels tend to travel in slow turning and predictable paths through time and space. However, considering the typical speeds of movement of maritime vessels, the frequent position updates transmitted by vessels represent excessive information to describe the vessels' general movements since many points are colinear. As a result, the aggregate bandwidth of real-time AIS data represents a significant data engineering challenge.

The illustrative embodiments also recognize and take into account that current approaches to down sampling in the maritime domain are crude and based on limiting message frequency globally or discarding messages from stationary vessels.

The illustrative embodiments also recognize and take into account that location services for detecting geofence interactions from positional updates are typically offered at high cost. Such implementations appear to only detect events when a positional update falls within a geofence and cannot properly detect intersections of zones against a movement segment where the start and end position of the segment are outside the zone. Furthermore, standards for geospatial analysis such as GDAL (Geospatial Data Abstraction Library) treat the problem as a two-dimensional problem.

The illustrative embodiments provide a method to eliminate the excessive data from a string of vessel positions while still retaining the space-time positions needed to adequately describe a vessel's movements, for visualization, storage, and or downstream generation of events (such as geofence breaks).

The illustrative embodiments also provide a method to detect geofence break events in real-time from high bandwidth streams of vessel positions evaluated against complex geometries. The illustrative embodiments utilize three-dimensional vector algebra to compute a true great circle/great arc analysis of intersection between two direct paths on a sphere surface rather than resorting to rhumb line simplifications. This reframing of great arc intersection as a segment-triangle intersection in 3D simplifies the mathematical treatment of edge cases such as 3D to 2D projection distortion and is well suited to advanced Single Instruction Multiple Data (SIMD) instructions on modern CPU architectures.

The illustrative embodiments also provide a spherical spatial discretization function and related data structure suited to efficient intersection detection for geofences and movements on a spherical surface.

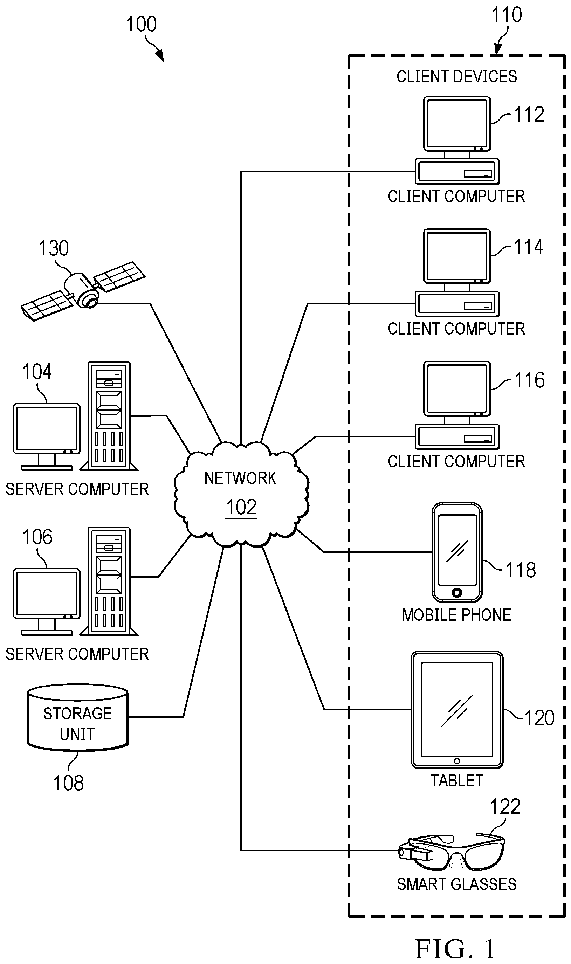

With reference to **Figure 1,** a pictorial representation of a network of data processing systems is depicted in which illustrative embodiments may be implemented. Network data processing system **100** is a network of computers in which the illustrative embodiments may be implemented. Network data processing system **100** contains network **102,** which is the medium used to provide communications links between various devices and computers connected together within network data processing system **100.** Network **102** might include connections, such as wire, wireless communication links, or fiber optic cables.

In the depicted example, server computer **104** and server computer **106** connect to network **102** along with storage unit **108.** In addition, client devices **110** connect to network **102.** In the depicted example, server computer **104** provides information, such as boot files, operating system images, and applications to client devices **110.** Client devices **110** can be, for example, computers, workstations, or network computers. As depicted, client devices **110** includes client computers **112, 114,** and **116.** Client devices **110** can also include other types of client devices such as mobile phone **118,** tablet computer **120,** and smart glasses **122.**

In this illustrative example, server computer **104,** server computer **106,** storage unit **108,** and client devices **110** are network devices that connect to network **102** in which network **102** is the communications media for these network devices. Some or all of client devices **110** may form an Internet of things (IoT) in which these physical devices can connect to network **102** and exchange information with each other over network **102.**

A number of satellites such as satellite **130** might provide communications between client devices **110** and server computers **104, 106** and form part of the infrastructure of network **102.**

Client devices **110** are clients to server computer **104** in this example. Network data processing system **100** may include additional server computers, client computers, and other devices not shown. Client devices **110** connect to network **102** utilizing at least one of wired, optical fiber, or wireless connections.

Program code located in network data processing system **100** can be stored on a computer-recordable storage medium and downloaded to a data processing system or other device for use. For example, the program code can be stored on a computer-recordable storage medium on server computer **104** and downloaded to client devices **110** over network **102** for use on client devices **110.**

In the depicted example, network data processing system **100** is the Internet with network **102** representing a worldwide collection of networks and gateways that use the Transmission Control Protocol/Internet Protocol (TCP/IP) suite of protocols to communicate with one another. At the heart of the Internet is a backbone of high-speed data communication lines between major nodes or host computers consisting of thousands of commercial, governmental, educational, and other computer systems that route data and messages. Of course, network data processing system **100** also may be implemented using a number of different types of networks. For example, network **102** can be comprised of at least one of the Internet, an intranet, a local area network (LAN), a metropolitan area network (MAN), or a wide area network (WAN). **Figure 1** is intended as an example, and not as an architectural limitation for the different illustrative embodiments.

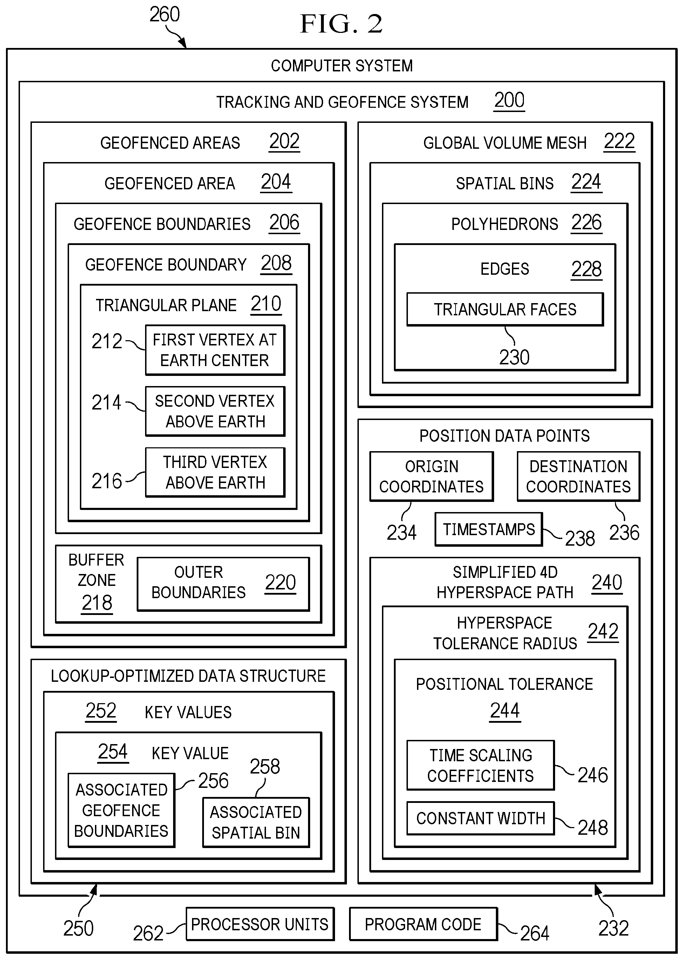

**Figure 2** is a block diagram of a tracking and geofence system depicted in accordance with an illustrative embodiment. Tracking and geofence system **200** might be implemented in network data processing system **100** in **Figure 1.**

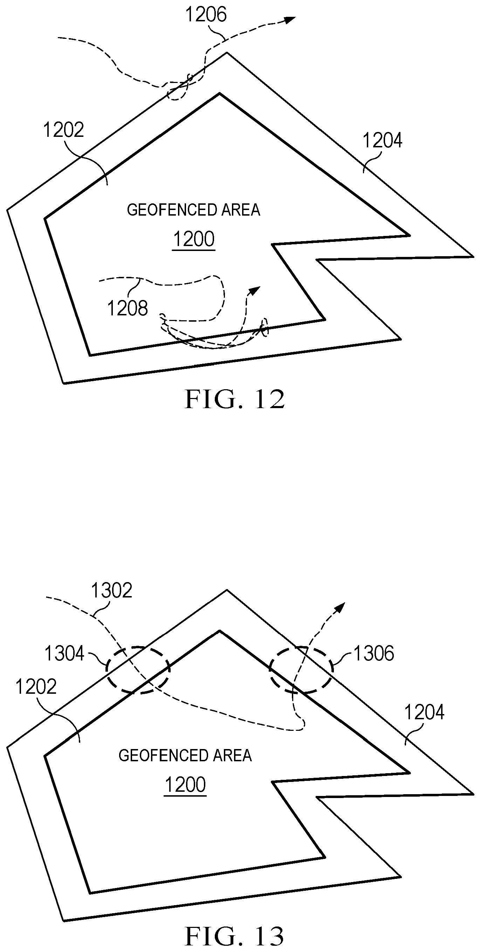

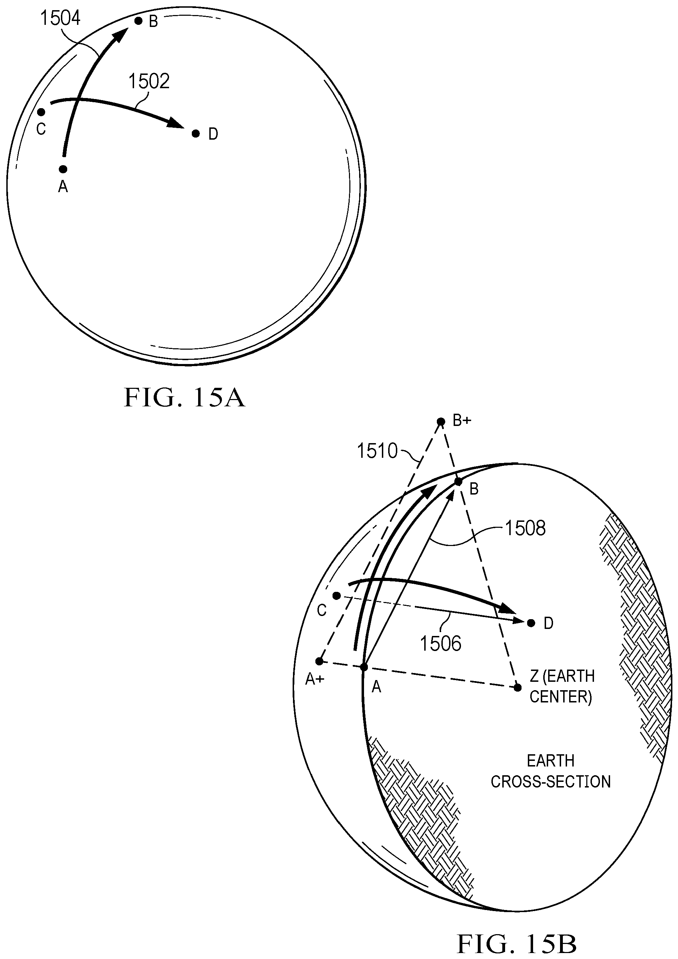

Tracking and geofence system **200** monitors the movement of vehicles (e.g., maritime vessels). These movement can be tracked with regard to their ingress and egress from different geofenced areas **202** around the world. Each geofenced area **204** is enclosed by a number of geofence boundaries **206** (see **Figure 12**). Each geofence boundary **208** is defined with reference to a triangular plane **210.** This triangular plane **210** is defined by a first vertex **212** at the center of the earth, a second vertex **214** above the earth's surface, and a third vertex **216** also above the earth's surface (see **Figure 15B**).

Each geofenced area **204** might also include a buffer zone **218** that comprises a number of outer boundaries **220** that match the contours of the geofenced area **206.** This buffer zone **218** can assist in reducing the number of geofence ingress and egress events reported, and thereby reduce associated bandwidth demands, by accounting for local "jitter" in the movement of vessels near geofence boundaries (see **Figures 12-14**).

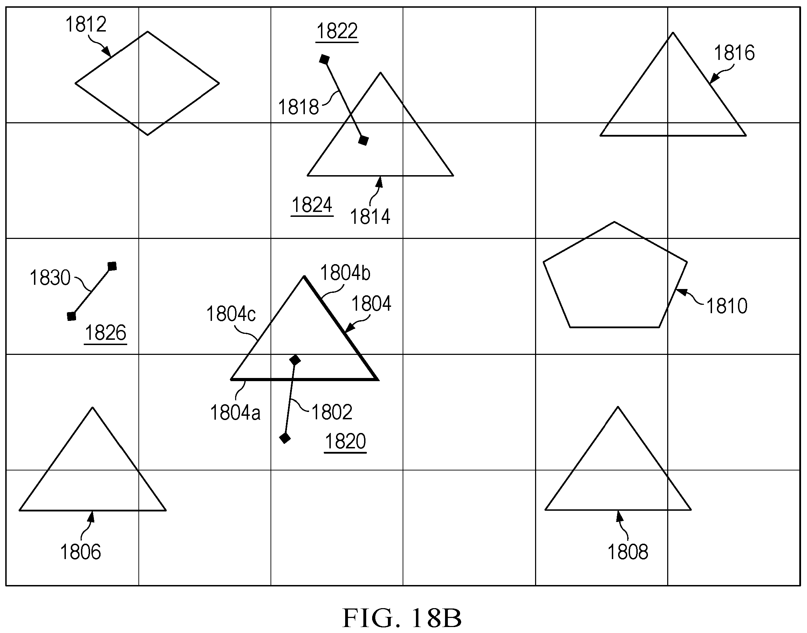

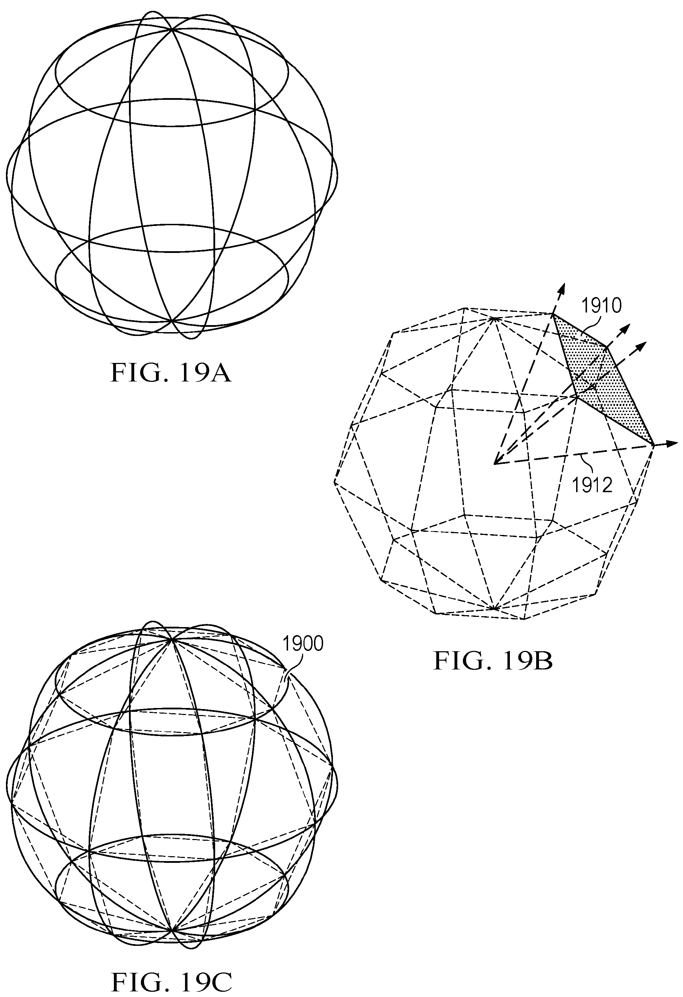

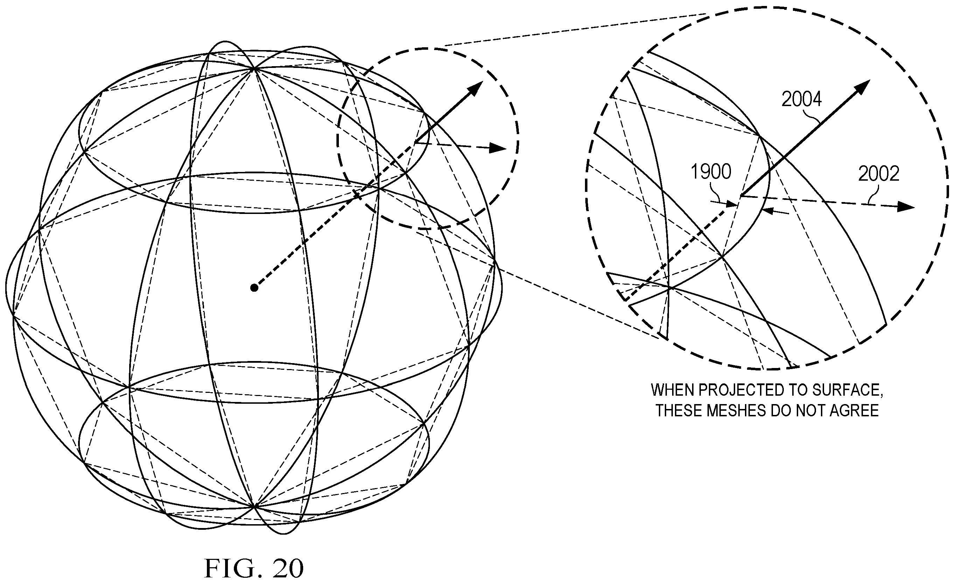

Monitoring and reporting ingress and egress to and from geofence areas **202** can be further assisted by the use of a global volume mesh **222** that organizes the space inside and around the earth into a number of polyhedron volumes representing spatial bins **224** (see **Figures 18B-19C**). Geofence boundaries **206** of a given geofenced area **204** might fall within one or more spatial bins **224.** The spatial bins **224** are defined as non-intersecting polyhedrons **226** comprised of four triangular faces **230** extending into space from the earth's center (see **Figure 19B**). These triangular faces **230** form a square based pyramid with the pyramid tip at the earth's center and the pyramid's base defining the edges **228** of the spatial bin. While the bin edges **228** are formed by triangular faces **230,** the surface of the earth at equal latitude and longitude is conical (see **Figures 19C** and **20**).

Tracking and geofence system **200** tracks the position of vessels by means of position data points **232** that are transmitted by vessels at regular intervals. These position data points might comprise, e.g., automatic identification system (AIS) data. The position data points **232** have respective timestamps **238** so that tracking and geofence system **200** knows when a vessel was at a particular location.

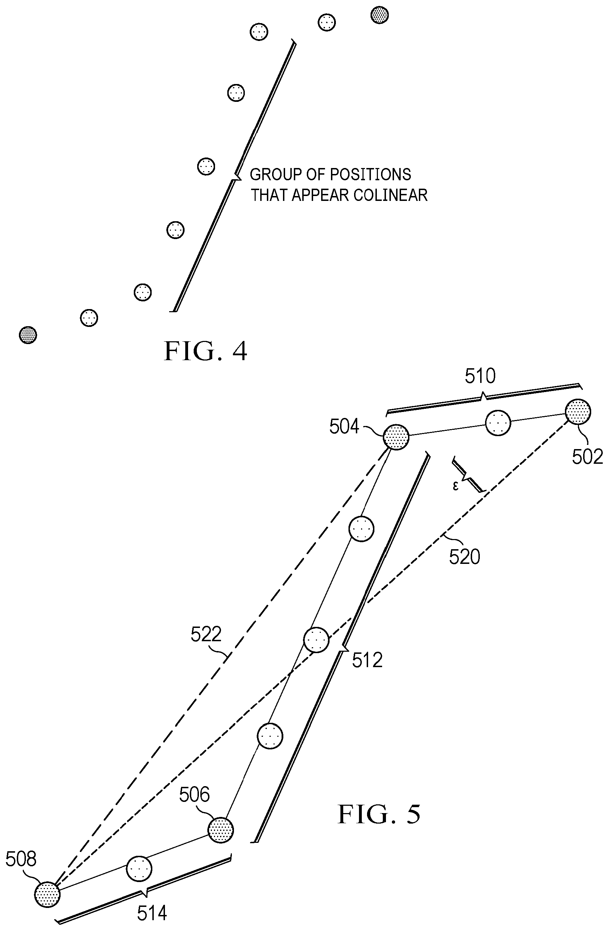

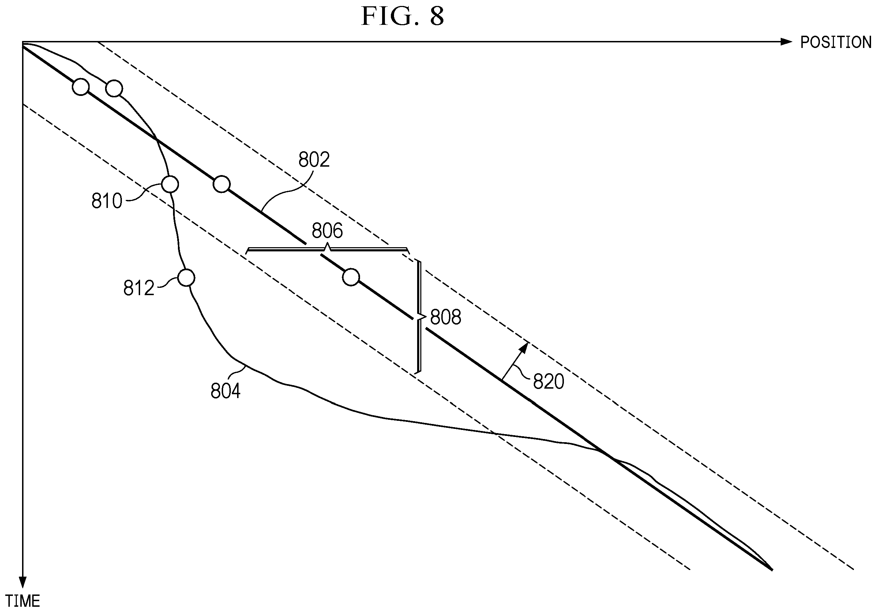

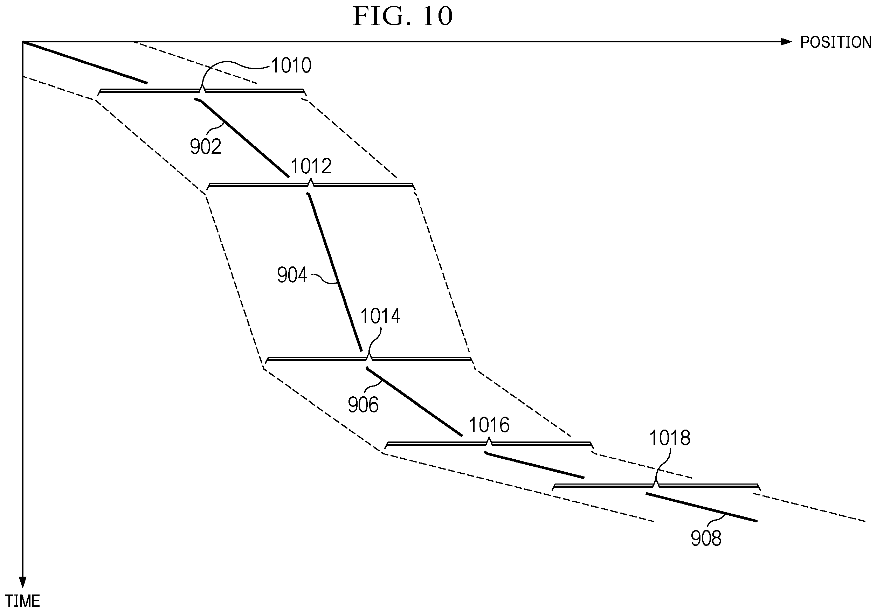

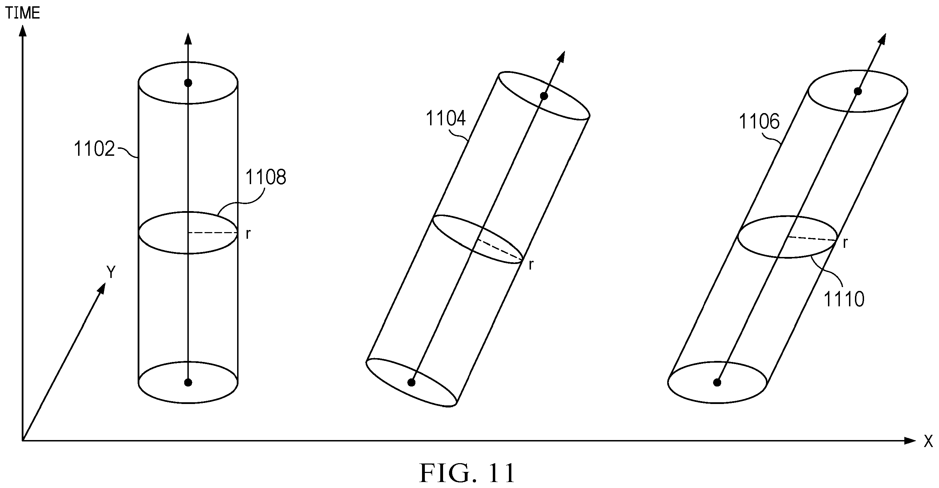

A sequence of position data points **232** with respective associated timestamps **238** define a path of a vessel in four-dimension hyperspace, with time serving as the fourth dimension. Tracking and geofence system **200** generates a simplified four-dimensional hyperspace path **240** from these position data points **232** by applying the Ramer-Douglas-Peucker algorithm to filter out points that do not provide significant information regarding the path of the vessel (see **Figures 5-7**). The simplified 4D hyperspace path has an associated hyperspace tolerance radius **242** that is used to filter trivial changes in the vessel path (see **Figures 8**). The hyperspace tolerance radius **242** comprises a positional tolerance **244.** Time scaling coefficients **246** can be applied to the positional tolerance to maintain a constant tolerance width **248** across different speeds of the vessel (see **Figures 10** and **11**).

Tracking and geofence system **200** might employ a lookup-optimized data structure **250,** which comprises a number of key values **252**. Each key value **254** has associated edges **256,** which may belong to but to not necessarily constitute a closed geofence area **204,** and an associated spatial bin **258**. When position data points **232** for a vessel are received, such as origin coordinates **234** and destination coordinates **236,** the vessel path segment can be translated into two key values **252** (one for the start, and one for the end) which are used to retrieve the associated geofence edges within the associated spatial bin **258** that maps to those key values in the lookup-optimized data structure **250** (see **Figure 18B**).

Tracking and geofence system **200** can be implemented in software, hardware, firmware, or a combination thereof. When software is used, the operations performed by tracking and geofence system **200** can be implemented in program code configured to run on hardware, such as a processor unit. When firmware is used, the operations performed by tracking and geofence system **200** can be implemented in program code and data and stored in persistent memory to run on a processor unit. When hardware is employed, the hardware can include circuits that operate to perform the operations in tracking and geofence system **200.**

In the illustrative examples, the hardware can take a form selected from at least one of a circuit system, an integrated circuit, an application specific integrated circuit (ASIC), a programmable logic device, or some other suitable type of hardware configured to perform a number of operations. With a programmable logic device, the device can be configured to perform the number of operations. The device can be reconfigured at a later time or can be permanently configured to perform the number of operations. Programmable logic devices include, for example, a programmable logic array, a programmable array logic, a field programmable logic array, a field programmable gate array, and other suitable hardware devices. Additionally, the processes can be implemented in organic components integrated with inorganic components and can be comprised entirely of organic components excluding a human being. For example, the processes can be implemented as circuits in organic semiconductors.

Computer system **260** is a physical hardware system and includes one or more data processing systems. When more than one data processing system is present in computer system **260,** those data processing systems are in communication with each other using a communications medium. The communications medium can be a network. The data processing systems can be selected from at least one of a computer, a server computer, a tablet computer, or some other suitable data processing system.

As depicted, computer system **260** includes a number of processor units **262** that are capable of executing program code **264** implementing processes in the illustrative examples. As used herein, a processor unit in the number of processor units **262** is a hardware device and is comprised of hardware circuits such as those on an integrated circuit that respond and process instructions and program code that operate a computer. When a number of processor units **262** execute program code **264** for a process, the number of processor units **262** is one or more processor units that can be on the same computer or on different computers. In other words, the process can be distributed between processor units on the same or different computers in a computer system. Further, the number of processor units **262** can be of the same type or different type of processor units. For example, a number of processor units can be selected from at least one of a single core processor, a dual-core processor, a multi-processor core, a general-purpose central processing unit (CPU), a graphics processing unit (GPU), a digital signal processor (DSP), or some other type of processor unit.

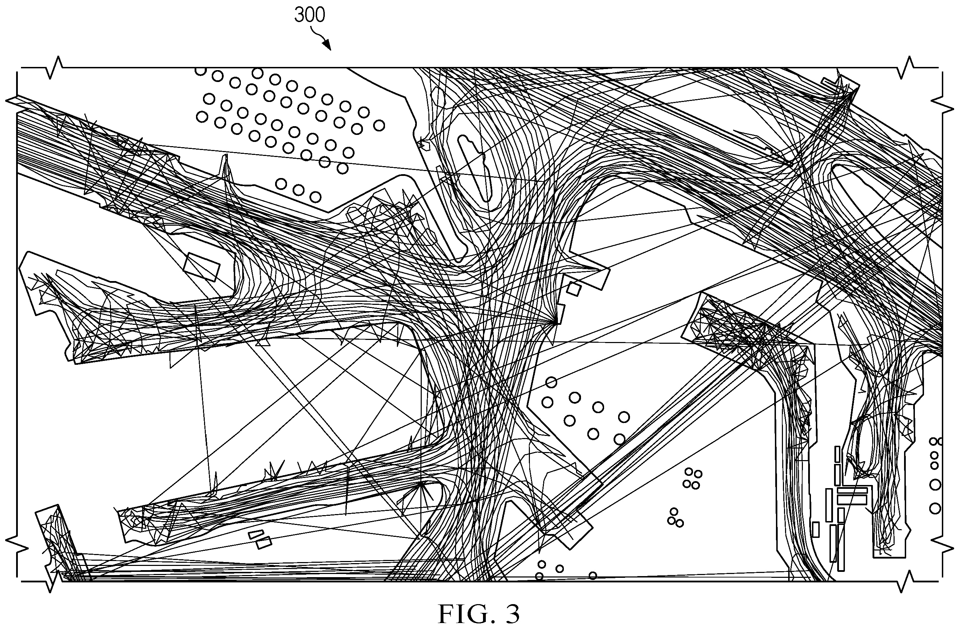

**Figure 3** depicts a pictorial diagram illustrating a stream of automatic identification system (AIS) data from a number of sources. Map **300** displays a multitude of tracks indicating the paths of maritime vessels within a particular geographic region. The example shown in **Figure 3** depicts a snapshot of maritime traffic around the port of Rotterdam. The volume of data traffic involved in tracking large numbers of vessels places a significant burden on the communications infrastructure, especially when one considers that the information is being transmitted and tracked in real time.

**Figure 4** illustrates a number of data points representing positional updates of a vessel. As mentioned above, maritime vessels tend to travel in slow turning and predictable paths through time and space. As a result, many position update points are approximately colinear, as indicated in **Figure 4.**

**Figure 5** illustrates lines segments calculated from position update data points in accordance with an illustrative embodiment. In this example, the Ramer-Douglas-Peucker (RDP) algorithm is used to simplify the path described by the position points by identifying degenerate data. The RDP algorithm begins by drawing a line **520** between the start point **502** and end point **508** of a path, and then identifies the furthest point from that line, which in the present example is point **504.** The RDP algorithm then subdivides line **520** using this furthest point **504,** resulting in two new line segments **510** and **522.** The RDP algorithm then repeats the process and determines the point furthest from line **522,** which in the present example is point **506.** Again, line **522** is subdivided using this furthest point **506,** resulting in new line segments **512** and **514.**

This process of line simplification continues recursively until the furthest point for all line segments is within a

specified threshold distance $\varepsilon$ from the line segments. Without this threshold distance the simplification process would simply continue until arriving at the original series of data points. Therefore, a given subgroup of data points within the threshold distance $\varepsilon$ are close enough to be treated as a single line segment and can be discarded.

The RDP simplification algorithm was developed for cartographic generalization of geometries in two dimensions and as explained above, current standards for geospatial analysis such as GDAL treat similar simplification and intersection detection problems two-dimensionally. As a result, dateline wrapping issues and/or polar distortions become problematic and implementing corrections and edge-case handling prove extremely challenging and computationally expensive. However, the RDP algorithm does not inherently depend on the 2D nature of the original application and can be generalized to three dimensions using a three-dimensional geometric solution for line-point distance. Therefore, the line-point calculations from the two-dimensional simplification shown in **Figure 5** can be updated for 3D. The illustrative embodiments further generalize the RDP algorithm into four-dimensional hyperspace wherein positions are converted from 2D polar coordinates to Cartesian XYZ coordinates for position on a sphere in 3D space (see **Figures 15A** and **15B**), with the timestamp of the position update point comprising the fourth dimensional coordinate.

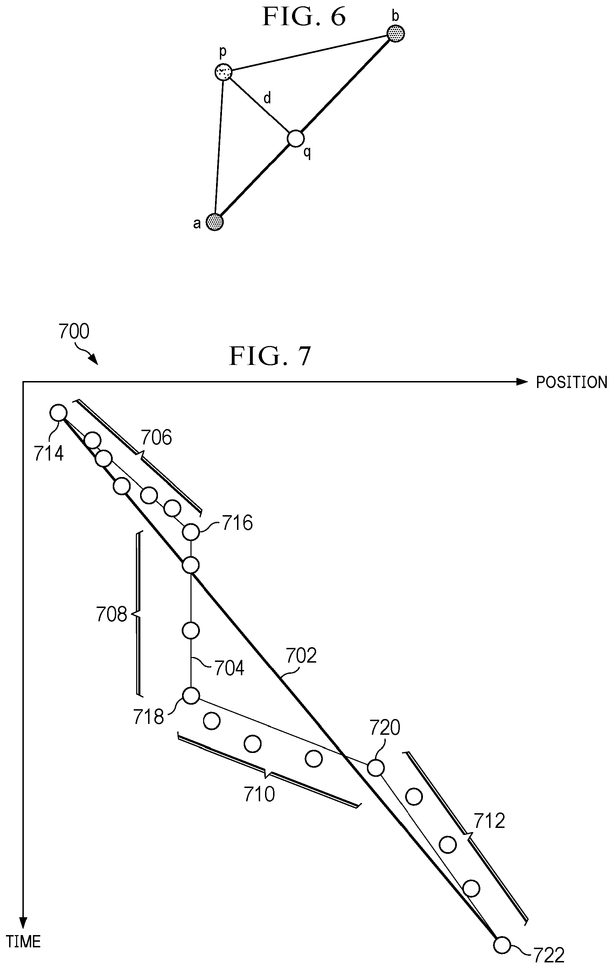

**Figure 6** illustrates the calculation of line-point distances between N-dimensional points in accordance with an illustrative embodiment. In the present example, N is 4, wherein each point represents a point in three-dimensional space at a point in time (X,Y,Z,T).

For a given line segment $\overrightarrow{ab}$ between space-time point $a$ and space-time point $b$ the illustrative embodiments can calculate the perpendicular hyperdistance $d$ of a point $p$ from line $\overrightarrow{ab}$ by finding the point $q$ representing the point on line $\overrightarrow{ab}$ that is closet to point $p$ and then finding the hyperdistance between point $p$ and $q$ via the dimensionally generalizable Euclidean distance calculation. Line $ab$ might represent, for example, the average speed of a vessel moving in a given direction. Point $p$ might represent a deviation from that average speed (i.e., slowing down or speeding up) (see **Figure 7** below).

Point q along line segment $\overrightarrow{ab}$ can be found by parameterizing any given point along $\overrightarrow{ab}$ as:

$$q = a + k\overrightarrow{ab} \qquad\qquad \text{(Eq. 1)}$$

where parameter $k$ describing the traversal fraction along line segment $\overrightarrow{ab}$ can be found for the closet point q via the expression:

$$k = \frac{\overrightarrow{pa} \cdot \overrightarrow{ba}}{\|\overrightarrow{ba}\|} \qquad\qquad \text{(Eq. 2)}$$

Perpendicular distance d can then be expressed:

$$d = \|\overrightarrow{pq}\| \qquad\qquad \text{(Eq. 3)}$$

**Figure 7** depicts a diagram illustrating the relationship between spatial displacement and time for vessel in accordance with an illustrative embodiment. Chart **700** can be viewed as a 4D chart in which the horizontal axis represents position in 3D Cartesian XYZ coordinates with respect to an arbitrary direction, and the vertical axis represents time.

For ease of illustration center line **702** represents a hypothetical straight path of a vessel traveling at constant speed in the (1,1,1) direction through 3D space. Merely noting the position of the vessel in Cartesian coordinates according to the RDP simplification does not account for vessel speed. By adding the vertical time axis, chart **700** visualizes changes in displacement over time (i.e., speed). Since center line **702** represents a straight path at constant speed, deviations from center line **702** represents a vessel maintaining the same heading, but overtaking, falling behind, and then catching up with the average speed of center line **702**.

Line **704** represents the actual path of a vessel over time as calculated according to the RDP line simplification algorithm described above but now adding the fourth dimension of time to the 3D Cartesian XYZ coordinates. Each change in the slope of line **704** represents changes in speed of the vessel. Durations where line **704** is above center line **702** represent durations in which the vessel is ahead of the average speed. Durations where line **704** is below center line **702** represent durations where the vessel is behind the average speed. Line segment **706** represents the vessel underway with a relatively low speed as it approaches a port at inflection point **716** where it remains stationary before departing later, shown at inflection point **718**. In the case of line segment **708**, the data points do not change in position as time increases, which indicates the vessel is stationary (e.g., anchored at port). After leaving port, the vessel accelerates to a high speed, represented by line segment **710,** before decelerating to a medium cruising speed represented by line segment **712.**

In terms of reducing real-time data transmission burdens, the data of most interest is data that represents a change in the vessel's behavior. For example, in current AIS data handling, vessels will continue to transmit position updates at regular intervals while stationary at port, such as represented by line segment **708.** Ideally, such position update data is redundant and not necessary. Additionally, vessels with steady headings and speeds are maintaining a constant behavior and therefore frequent positional updates are not necessary to describe this constant behavior. Treating time as a vector dimension in this simplification approach allows for changes in vessel behavior such as change in speed to be represented in the simplified output even if the vessel's direction of travel remains unchanged.

When combining spatial and temporal units in a 4D vector space, a scaling relationship between units is necessary for the geometric conclusions in hyperspace to be physically meaningful. **Figure 8** depicts a diagram illustrating time scaling in tracking vessel movements in accordance with an illustrative embodiment. For center line **802** representing average speed, there is a positional tolerance **806** along the horizontal position axis and a velocity dependent time tolerance **708** along the vertical time axis that together represent a "radius" **820** within which data points do not represent a deviation from the current/previous status and therefore are not noteworthy. Tolerance radius **820** is the hyperspace equivalent of threshold distance $\varepsilon$ shown in **Figure 5.** For any given time, the goal is to determine whether the vessel position point is within this tolerance radius **820** of the interpolated point for that line segment.

In the present example, point **810** on line **804** representing the actual path of the vessel falls within the tolerance radius **820** of line segment **802** and can be considered an inconsequential change in speed of the vessel. However, as time increases with little change in position, the resulting position point **812** at the next update now falls outside the tolerance radius **820,** representing the vessel approaching a stop. Therefore, in order to stay within the tolerance radius **820,** the vessel in question must maintain average speed to avoid breaching the threshold. Stated differently, for a given value of time, the vessel must not breach the distance threshold from the average path **802** at that time.

Referring back to **Figure 7,** inflection points **714, 716, 718, 720, 722** along line **704** marking the transition between line segments **706, 708, 710, 712** represent the points of interest. The data points along the line segments between the inflection points **714, 716, 718, 720, 722** do not provide any new information regarding the status of the vessel and ideally can be ignored. For example, in tracking the positional data points in real-time there is not a clear differentiation between vessels that are stationary versus moving very slowly. If the tolerance radius against the projected path is not violated, the data points are ignored. It is only after the position has remained unchanged long enough to violate the tolerance radius that the vessel's average speed is reclassified as being much slower.

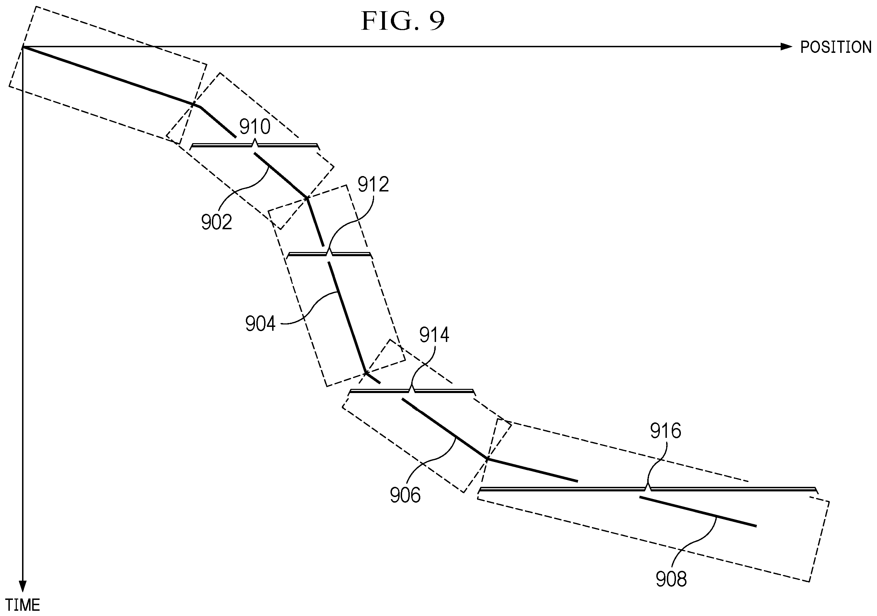

**Figure 9** depicts a diagram illustrating speed dependence of time scaling. A curious phenomenon of time scaling is that when using perpendicular hyperdistance as a proximity criterion, the positional tolerance depends on the speed of the vessel. As shown in the example in **Figure 9,** the positional tolerances **910, 912, 914, 916,** along the horizontal position axis varies with the speed (slope) of the respective line segments **902, 904, 906, 908.** As a result of this variability, vessel movements that should fall outside the tolerance radius do not.

The overcome the issue of speed-dependent positional tolerance, the illustrative embodiments utilize a time scaling ("squashing") coefficient to keep positional tolerance constant.

**Figure 10** depicts a diagram illustrating time scaling with position tolerance correction in accordance with an illustrative embodiment. In this example, time scaling coefficients are applied to the line segments **902, 904, 906, 908** shown in **Figure 9.** However, because of the time scaling coefficients, the positional tolerances **1010, 1012, 1014, 1016, 1018** for each segment are identical in width despite the changes in vessel speed from line segment to line segment.

The time scaling coefficient (tsc) is expressed:

$$tsc = \frac{t \cdot v}{|t||v|} \qquad \text{(Eq. 4)}$$

where $t$ is unit vector of time and $v$ is velocity.

In the four-dimensional case, the goal is to evaluate whether the distance $d$ is greater than the specified threshold, where (from Eq. 3) $d$ is expressed as:

$$d = \|\overrightarrow{pq}\|$$

The time scaling coefficient can be applied to $\overrightarrow{pq}$ as a scaling matrix:

$$j = \begin{bmatrix} 1 & 0 & 0 & 0 \\ 0 & 1 & 0 & 0 \\ 0 & 0 & 1 & 0 \\ 0 & 0 & 0 & 1/_{tsc} \end{bmatrix} * \overrightarrow{pq} \qquad \text{(Eq. 5)}$$

then

$$d = \|j\| \qquad \text{(Eq. 6)}$$

**Figure 11** depicts a diagram illustrating a cylinder representing a spatial threshold around the path of a vessel in accordance with an illustrative embodiment. The cylinders **1102, 1104, 1106** are representations of the tolerance radius **r** around the velocity vector of the vessel under different conditions. The velocity vector is representative of a line segment such as those shown in **Figures 9** and **10.**

Cylinder **1102** is an example of a spatial threshold around an entity at rest. Similar to line segment **704** in **Figure 7,** the position in space (along the X and Y axes) does not change as time increases (i.e., the vessel travels only through time but not space).

Cylinder **1104** represents a spatial threshold around a moving vessel (e.g., moving in the 1,1,1 direction), forming a cylinder aligned with the velocity vector. The tilt of cylinder **1104** represents movement through space and time since the position changes along the X and Y axes as time increases. Ideally, for an X-Y-Z-Time 4D segment, the spatial tolerances should be spherical, centered around linear traversal of the space-time segment. This spherical tolerance would be analogous to a circular cross section in the X-Y plane such as cross-section 1108. However, this goal is not achievable with the basic hypercylinder axially aligned with the velocity vector as shown in cylinder **1104.**

For a moving vessel, the desired result is an obliquely scaled perpendicular hyperdistance from an oblique hypercylinder surface, as illustrated by cross-section **1110** in cylinder **1106.** To achieve this result a linear transformation is applied to the geometry of cylinder **1104** to shift the coordinate system into a squashed (scaled) representation to achieve the needed obliqueness. This transformation is achieved by applying the scaling matrix in Eq. 5 above to all coordinates before finding the hyperdistance.

**Figure 12** depicts a diagram illustrating a geofenced area in accordance with an illustrative embodiment. Geofenced area **1200** might be, for example, a port zone that is defined by an inner boundary **1202.** Surrounding the geofenced area **1200** is an outer buffer zone **1204** that approximately matches the outline of the inner boundary **1202** expanded by a configurable tolerance.

Lines **1206** and **1208** comprise position updates representing the paths of vessels in and around geofenced area **1200.** As shown in **Figure 12,** the vessels may exhibit repetitive localized movements while station keeping, as shown by line **1206,** or while swinging at anchor due to tidal currents, as shown by line **1208.** This myriad of small adjustments is typical vessel behavior around ports and might be referred to as "jitter". If such jitter occurs in proximity to the inner boundary **1202** of the geofenced area **1200,** it can generate multiple geofence alerts. However, these multiple geofence alerts give a false impression of the vessel's true course and unnecessarily use up bandwidth and computational resources for what are essentially false positives.

Building upon the idea described above of ignoring data points that do not provide any new information about the path of the vessel, the illustrative embodiments down sample to ignore movements across the inner boundary **1202** and buffer zone **1204** of geofenced area **1200** that do not represent true ingress or egress from the geofenced area **1200.**

The use of outer buffer zone **1204** helps filter jitter from triggering false geofence alerts. Only an ingress that crosses both the outer buffer zone **1204** and inner boundary **1202** of geofenced area **1200** would represent a true ingress of the vessel into the geofenced area. Conversely, only an egress through both the inner boundary **1202** and outer buffer zone **1204** would represent a true egress from the geofenced area **1200.**

In the example shown in **Figure 12,** line **1206** does not represent a true ingress into geofenced area **1200** because the vessel only crosses into the outer buffer zone **1204** and never crosses inner boundary **1202.** By the same token, the vessel path represented by line **1208** is not considered a true egress from geofenced area **1200** because the jitter only crosses the inner boundary **1202** and never crosses completely through outer buffer zone **1204.** Therefore, the illustrative embodiments would ignore both lines **1206** and **1208.**

**Figure 13** depicts a diagram illustrating high level geofence entry/exit detection in accordance with an illustrative embodiment. In contrast to lines **1206** and **1208** in **Figure 12,** line **1302** represents a true ingress and egress through geofenced area **1200.** At entry event **1304,** the vessel's path represented by line **1302** crosses through the outer buffer zone **1204** and crosses inner boundary **1202.** By satisfying both conditions, the entry event would trigger a geofence alert. Similarly, at exit event **1306** the vessel crosses inner boundary **1202** then passes completely through the outer buffer zone **1204.** Again, by satisfying both egress conditions, the exit event **1306** would trigger a geofence alert.

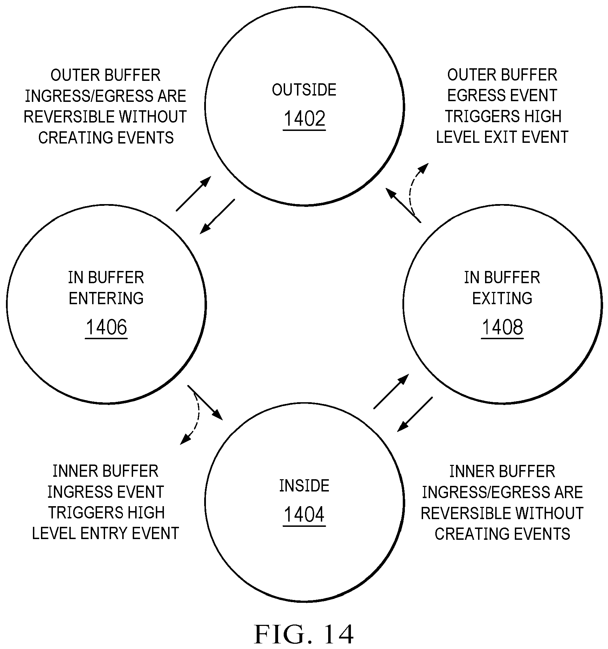

**Figure 14** depicts a diagram illustrating the different states of geofence ingress and egress in accordance with an illustrative embodiment. A vessel can be in one of four states in relation to a geofenced area. These states comprise outside **1402,** inside **1404,** in buffer entering **1406,** and in buffer exiting **1408.**

Transitions between the outside state **1402** and in buffer entering state **1406** are reversible without triggering a geofence event. When the vessel transitions from the in buffer entering state **1406** to the inside state **1404,** it triggers a high-level entry event.

Similarly, transitions between the inside state **1404** and in buffer exiting state **1408** are also reversible without triggering a geofence event. When the vessel transitions from the in buffer exiting state **1408** to the outside state **1402,** it triggers a high-level exit event.

The presence of buffer zones around adjacent geofenced areas opens the possibility of a vessel being considered as being in two zones at once. The buffers allow one to treat the position of a vessel at any time as a probability instead of an entirely reliable position due to tolerances on GPS accuracy. If that probability is down the middle of two adjacent zones, the illustrative embodiments can accommodate it as being in both zones simultaneously even though the inner boundaries do not overlap. For example, in a shipyard, interfering factors such as the presence of many flat metal surfaces and arc welding can produce considerable radio noise that reduces the accuracy and reliability of GPS signals. The buffer zones help to accommodate such confounding factors in determining the position of vessels within zones.

The discussion thus far has presented vessel movements and geofencing as occurring in a two-dimensional plane. However, it must be kept in mind that the vessels are in fact moving in arcs over the earth's surface. Furthermore, geofenced zones may cover large areas exceeding 10° of longitude or latitude where spherical distortions will be significant.

**Figures 15A** and **15B** depict diagrams illustrating predicting the intersection of vessel paths with geofence boundaries. **Figure 15A** depicts great arcs being evaluated for intersection in accordance with an illustrative embodiment. In the present example, great arc C->D **1502** represents the path of a vessel over the earth's surface from start (origin) coordinates C to end (destination) coordinates D. End coordinates D typically comprise the most recent update received from the vessel. Great arc A->B **1504** represents an edge of a geofence. The illustrative embodiments determine whether the great arc **1502** of the vessel path has intersected the great arc **1504** of the geofence edge. A geofence break can be defined as an intersection of these two arcs.

**Figure 15B** illustrates an equivalent geometric construction to test for intersection of vessel path with a geofence edge in accordance with an illustrative embodiment. In this view, the 3D C->D vector **1506** represents great arc **1502** when projected to the sphere surface. Similarly, the 3D A->B vector **1508** represents great arc **1504** when projected to the sphere surface.

**Figure 15B** depicts the construction of a triangle **1510** using points A+, B+, and Z (center of the earth) where A+ and B+ represent points A and B extended azimuthally such that the segment between A+ and B+ remains above the earth's surface at the segment midpoint. Any 3D vector that intersects this triangle **1510** describes a great arc intersection. In the present example, C->D vector **1506** intersects the plane of triangle **1510,** indicating that the vessel's path will generate a geofence break.

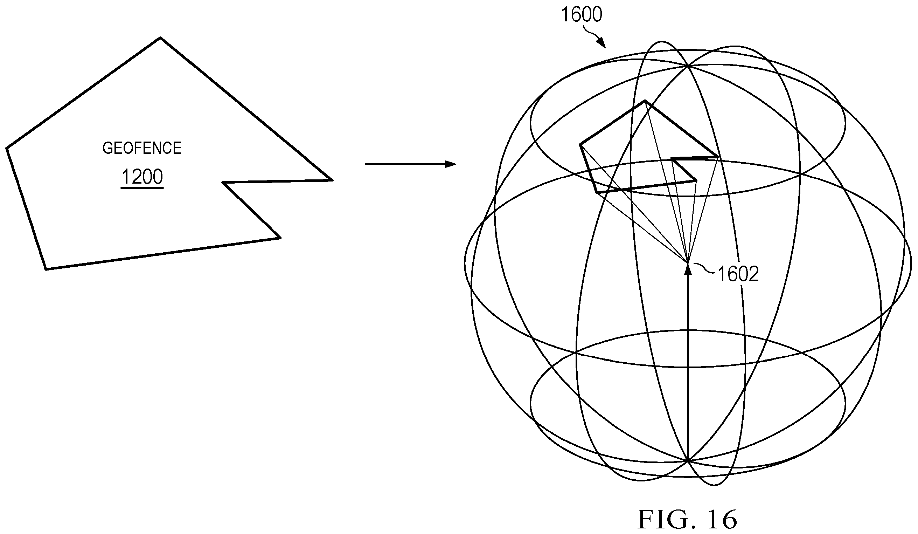

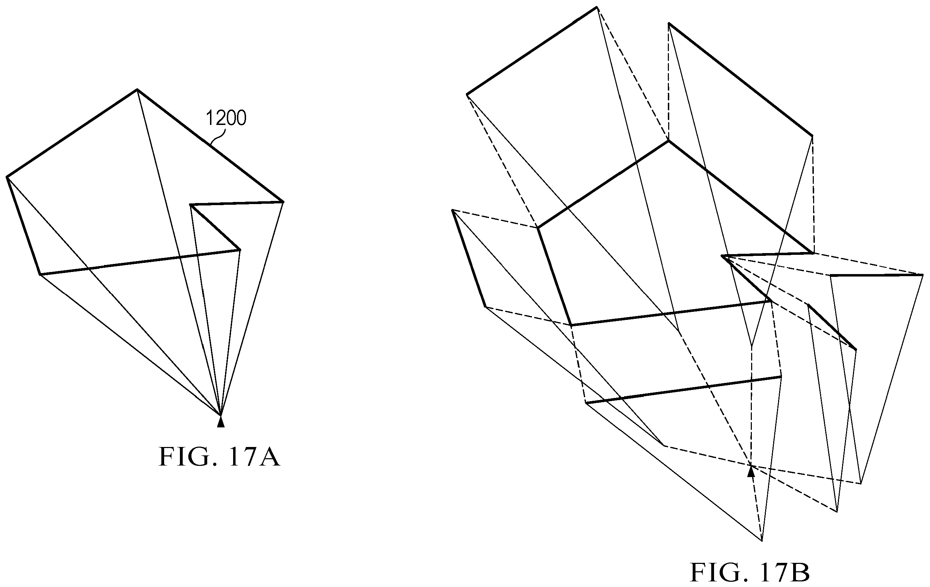

**Figure 16** depicts the projection of a geofenced area onto the earth's surface. In this view, the geofenced area **1200** is shown in relation to a simple representation of the earth **1600** using lines of latitude and longitude. As illustrated, the edges of the geofenced area **1200** are depicted as triangular projections from the earth's center **1602** (shown more clearly in **Figures 17A** and **17B**).

**Figure 17A** depicts the geofenced area **1200** as a geospatial volume originating at the center of the earth in accordance with an illustrative embodiment. **Figure 17B** depicts an exploded view of this geospatial volume. As can be seen in these figures, the edges comprising the geofenced area **1200** can be represented by respective triangular projections from the earth's center similar to triangle **1510** in **Figure 15B.**

Bandwidth requirements can be further reduced by limiting the number of geofence edges that have to be tested for each vessel path segment. This reduction can be accomplished with a lookup-optimized data structure designed to efficiently provide subsets of the total set of geofence edges based on their locality to the geometry of the vessel path segment being evaluated for intersections. By using this lookup-optimized data structure distant geofence edges do not need to be evaluated.

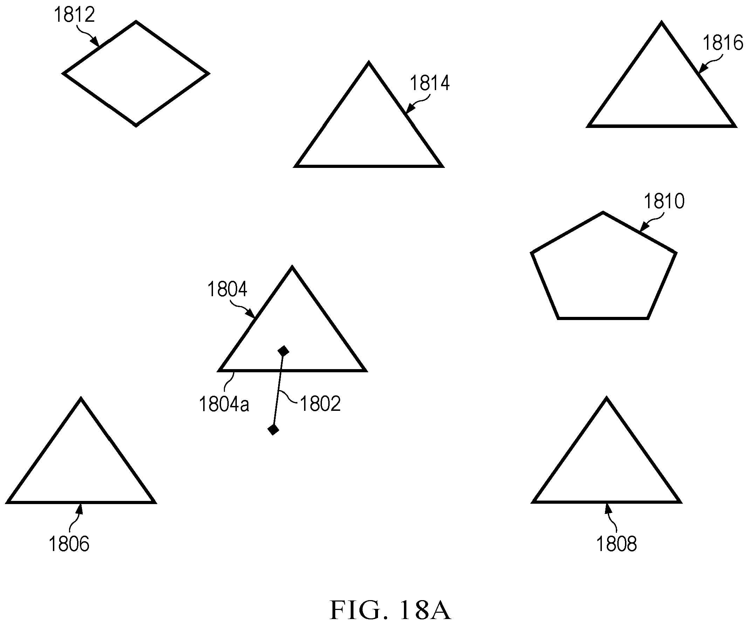

**Figures 18A** and **18B** illustrate the application of geographic binning in accordance with an illustrative embodiment. **Figure 18A** depicts several geofenced areas stored in an unoptimized flat list. In this example, segment **1802** represents an incremental step in the path of a vessel, which can be seen to intersect edge **1804a** of geofence area **1804.** For a processing system to detect this intersection, the system must test all the edges of all geofenced areas **1804-1816** for intersection against segment **1802,** which entails substantial processing resources when dealing with many millions of geofence edges.

**Figure 18B** depicts the application of spatial discretization and an associated lookup-optimized data structure to minimize the necessary geofence edge testing required to reliably detect a valid intersection in accordance with an illustrative embodiment. In **Figure 18B** space has been discretized arbitrarily into a grid of 30 spatial bins. A precomputation process is used to interpret the geometry of all geofences (**1804-1816**) and populate a lookup-optimized data structure comprised of sets of geofence edges grouped by their association with given spatial bins. Association here being defined by the presence of a geofence edge vertex within a spatial bin, or by the intersection of a geofence segment edge with the bounds of a given spatial bin. This detection of association is achieved by constructing a 3D binning mesh of the spatial discretization bounds and evaluating the edges of this mesh for intersections with geofence edge segments. It is common for geofence edges to be associated with multiple bins.

When evaluating an incremental step in the path of a vessel against a set of geofences the application of this lookup-optimized data structure enables a dramatic reduction in the number of geofence edges that need to be tested to reliably detect all potential intersections. If the origin and destination points of an incremental step in a vessel path are within a single spatial bin, only geofence edges associated with that bin need to be tested. For example, in **Figure 18B** vessel path **1802** is contained entirely within geospatial bin **1820**. Therefore, only geofence edges **1804a** and **1804b** (which the precomputation step previously associated with bin **1820** within the lookup-optimized data structure) are tested for intersection since they are the only geofence edges that partly or fully fall within spatial bin **1820.** Geofence edge **1804c** is not tested for intersection because no part of it falls within spatial bin **1820,** even though it helps define geofenced area **1804.** By the same token, none of the edges for the other geofenced areas **1806-1816** are tested since they do not fall within spatial bin **1820** and therefore are not associated with bin **1820.**

In contrast, vessel path **1818** falls within two spatial bins **1822** and **1824** (i.e., the origin coordinates and destination coordinates are located in different respective spatial bins). In this case, because the vessel path **1818** falls within more than one geospatial bin, the system will test all geofence edges of all geofence areas **1804-1816.** While such brute force testing of all geofence edges does require a substantial increase in computing resources, as a practical matter, only a small percentage of vessel traffic typically spans two spatial bins, making the need for such calculations relatively infrequent.

To rapidly retrieve relevant geofence edges for evaluation against an incremental step in a vessel path a spherical spatial discretization function is leveraged. This function has the mathematical property of reducing the coordinates of all points falling within a given spatial bin to a single shared identifying key value. A trivial example of such a spherical spatial discretization function would be to round the latitude and longitude of any given coordinate up to the nearest integer. This trivial example function would discretize the earth's surface into a grid of 68,800 1-degree by 1-degree bins. An example identifying value might be "5202" (a combination of integers "52" and "2") shared by coordinates [51.985,1.121], [51.488,1.874], etc. This example spherical spatial discretization function represents a trivial computational expense but allows coordinates of a prospective vessel path segment to be trivially translated into a key value which can then be used to retrieve the geofence edges associated with the spatial bin that maps to that key value in a lookup-optimized data structure. Examples of lookup-optimized data structures may include an array accessed using a numerical key as an access index or alternatively a hash-map based data structure such as a dictionary.

The trivial example of a spherical spatial discretization function described above discretizes an area in two dimensions. However, when such a function is applied in three dimensions, there are subtle discrepancies between the 3D binning mesh used for precomputation of geofence edge-spatial bin associations and a spherical spatial discretization function that relies on rounding latitudes to their nearest multiple of a given constant (this constant being "1 degree" in the above example).

**Figures 19A-19C** illustrate the alignment of the 3D binning mesh used for precomputation of geofence edge-spatial bin associations with a simple spherical spatial discretization function in accordance with an illustrative embodiment. **Figure 19A** illustrates an example of a simple spherical spatial discretization function binning of the earth's surface according to latitude and longitude. **Figure 19B** illustrates the equivalent 3D binning mesh used for precomputation of geofence edge-spatial bin associations. As shown in **Figure 19B,** space is discretized into a number of pyramidal sections. Each spatial bin area **1910** is defined by a triangular faces (planes) formed by rays **1912** originating from the center of the earth and extending outward into space, thereby forming a pyramidal polyhedron of which the "base" constitutes the spatial bin. Given a position of a vessel, a deterministic function determines in which one of these pyramids that position is located based only on the input positions and not by enumeration of known bins. In contrast to the pyramidal volumes represented in **Figure 19B, Figure 19A** represents latitude and longitude as conical volumes.

**Figure 19C** depicts a diagram illustrating the overlay between the simple spherical spatial discretization function in **Figure 19A** and the 3D binning mesh in **Figure 19B.** A discrepancy in the overlay results in gaps such as gap **1900** between the curved latitude and longitude lines (conical) and the straight edges of the 3D binning mesh (pyramidal), which is shown more clearly in **Figure 20.**

**Figure 20** depicts a diagram illustrating the spatial alignment disagreement between straight edges of the 3D binning mesh in 3D space and lines of equal latitude. Representing the straight edges of geofence bins as straight lines in 3D space loses the fact that in 3D space those lines are supposed to represent curvature at particular latitudes and longitudes.

This discrepancy results in gap **1900,** which is the difference between being equatorially aligned, as represented by vector **2002,** and being aligned to the normal of the surface, as represented by vector **2004.**

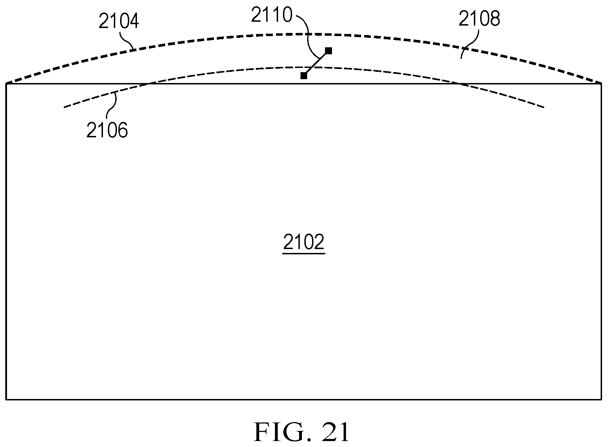

**Figure 21** depicts a diagram illustrating an example of an edge intersection scenario involving spatial alignment disagreement. **Figure 21** represents projection of a geofence zone onto a 2D map. Rectangle **2102** represents a simple hashing function in 2D.

Line **2104** represents the distorted edge of a geospatial bin resulting from projection of a 2D mesh onto a 3D surface such as shown in **Figure 20**. Line **2106** represents a straight edge of a geofenced area projected into 3D. Because of the distortion from projection of the straight lines of the bin and geofence edges into 3D, part of line **2106** extends into the "dead zone" **2108** resulting from the spatial alignment disagreement described above. As a result, the geofence edge represented by line **2106** crosses outside the definition of the spatial hashing function represented by rectangle **2102**.

In this situation, a vessel path represented by line **2110** that intersects the geofence edge represented by line **2106** within the dead zone **2108** would not be detected.

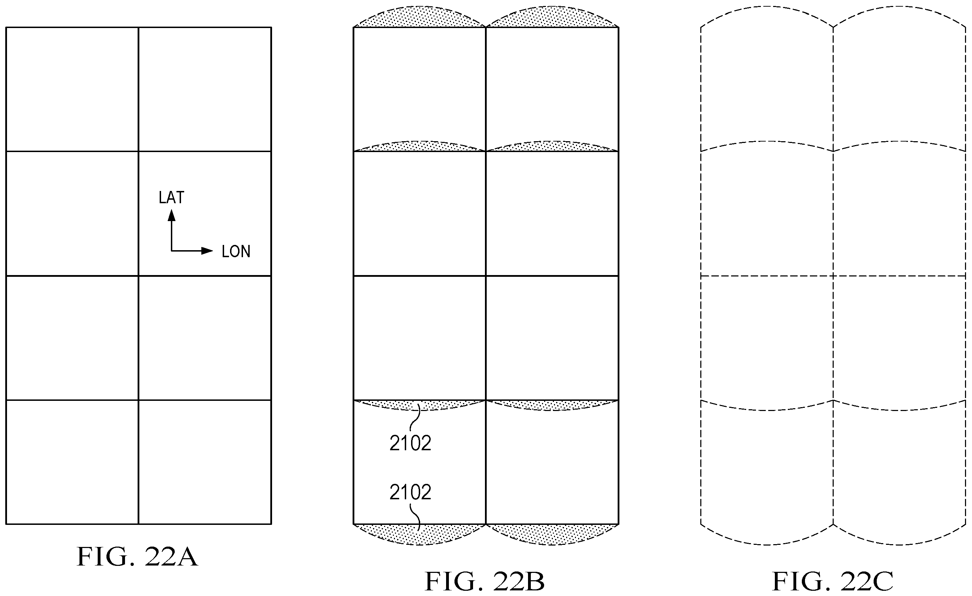

**Figures 22A-22C** depict the formulation of a hashing function that accounts for spatial alignment disagreement in accordance with an illustrative embodiment. **Figure 22A** illustrates simple binning for the earth's surface according to latitude and longitude. **Figure 22B** illustrates in a 2D projection discrepancies resulting from projection of 3D binning mesh geometry projected into 2D when compared to a spherical spatial discretization function based on latitude and longitude. Events that fall within these discrepancy zones **2102** are not reliably detected as described above.

**Figure 22C** illustrates a more advanced spherical spatial discretization function that incorporates corrections to align with 3D binning mesh geometry. All positions within a 3D binning mesh bin volume are mapped to the same value, avoiding the scenario shown in **Figure 22B** in accordance with an illustrative embodiment. This modification converts the true latitude or longitude into the grid normalized latitude or longitude. As a result, events that fall within the distorted line regions are reliably detected because they are now accounted for in the modified hashing function.

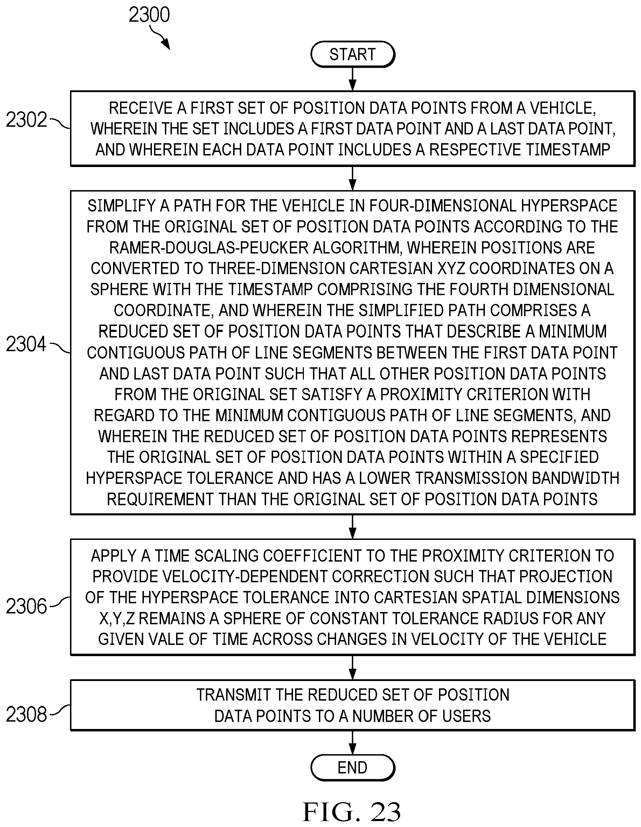

**Figure 23** depicts a flowchart illustrating a process for dynamically down sampling tracking data. Process **2300** might be implemented in tracking and geofence system **200** in **Figure 2.**

Process **2300** begins by receiving a first set of position data points from a vehicle, wherein the set includes a first data point and a last data point, and wherein each data point includes a respective timestamp (step **2302**). The tracking data might comprise automatic identification system (AIS) data. The tracking data might be received in real-time or comprise historical data.

A path of the vehicle in four-dimensional hyperspace is simplified from the position data points according to the Ramer-Douglas-Peucker algorithm (step **2304**). Positions are converted to three-dimension Cartesian XYZ coordinates on a sphere with the timestamp comprising the fourth dimensional coordinate. The simplified path comprises a reduced set of position data points that describe a minimum contiguous path of line segments between the first data point and last data point such that all other position data points from the original set satisfy a proximity criterion with regard to the minimum contiguous path of line segments. This proximity criterion might comprise a threshold perpendicular hyperdistance from the line segments of the minimum contiguous path of line segments. The reduced set of position data points represents the original set of position data points within a specified hyperspace tolerance and has a lower transmission bandwidth requirement than the original set of position data points.

A time scaling coefficient is applied to the proximity criterion to provide velocity-dependent correction such that the projection of the hyperspace tolerance into Cartesian spatial dimensions X,Y,Z remains a sphere of constant tolerance radius for any given vale of time across changes in velocity of the vehicle (step **2306**). The time scaling coefficient can be applied as a scaling matrix to calculate perpendicular hyperdistances of position data points from line segments of the minimum contiguous path of line segments.

The reduced set of position data points is transmitted to a number of users (step **2308**). Process **2300** then ends.

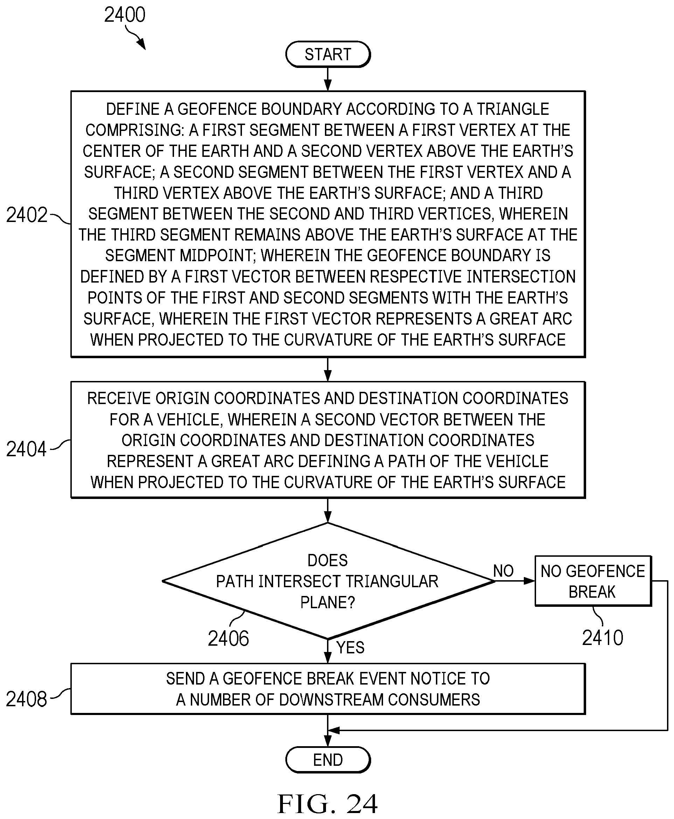

**Figure 24** depicts a flowchart for a process of detecting geofence break events in accordance with an illustrative embodiment. Process **2400** might be implemented in tracking and geofence system **200** in **Figure 2.**

Process **2400** begins by defining a geofence boundary according to a triangle (step **2402**). The triangle comprises a first segment between a first vertex at the center of the earth and a second vertex above the earth's surface, a second segment between the first vertex and a third vertex above the earth's surface, and a third segment between the second and third vertices, wherein the third segment remains above the earth's surface at the segment midpoint. The geofence boundary is defined by a first vector between respective intersection points of the first and second segments with the earth's surface, wherein the first vector represents a great arc when projected to the curvature of the earth's surface. The triangle is one of three or more triangles that define respective geofence boundaries enclosing a geofenced area on the earth's surface.

Process **2400** receives origin coordinates and destination coordinates for a vehicle, wherein a second vector between the origin coordinates and destination coordinates represent a great arc defining a path of the vehicle when projected to the curvature of the earth's surface (step **2404**). Process **2400** determines whether the second vector intersects the plane defined by the triangle, wherein an intersection of the plane represents a geofence break (step **2406**). If there is no intersection, there is no geofence break (step **2410**).

Responsive to a determination that the second vector intersects the plane, process **2400** sends a geofence break event notice to a number of downstream consumers (step **2408**). These downstream consumers might comprise end users and/or downstream event consuming systems. Process **2400** then ends.

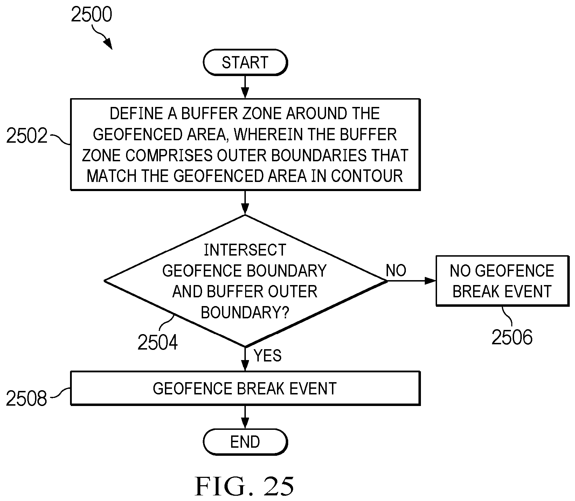

**Figure 25** depicts a flowchart for a process of implementing a geofence buffer zone in accordance with an illustrative embodiment. Process **2500** is a possible extension of step **2406** in **Figure 24.**

Process **2500** begins by defining a buffer zone around the geofenced area, wherein the buffer zone comprises outer boundaries that match the geofenced area in contour (step **2502**). To determine if there is a geofence break, process **2500** determines whether the vehicle path intersects both a geofence boundary and an out boundary of the buffer zone (step **2504**).

If the vehicle path does not intersect both the geofence area boundary and outer buffer zone boundary no geofence event is sent (step **2506**).

Process **2500** sends a geofence break event notice only when the path of the vehicle intersects both a geofence boundary of the geofenced area and an outer boundary of the buffer zone (step **2508**). Process **2500** then end.

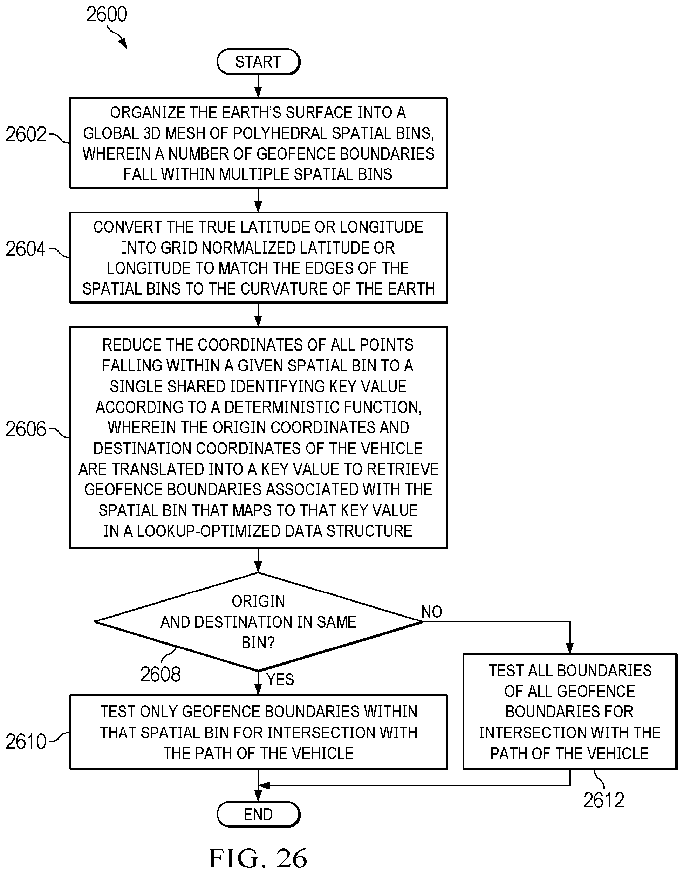

**Figure 26** depicts a flowchart for a process of geospatial binning in accordance with an illustrative embodiment. Process **2600** is a possible preliminary to process **2400** in **Figure 24.**

Process **2600** begins by organizing the earth's surface into a global three-dimensional mesh of polyhedral spatial bins, wherein a number of geofence boundaries fall within multiple spatial bins (step **2602**). Process **2600** might convert the true latitude or longitude into grid normalized latitude or longitude to match the edges of the spatial bins to the curvature of the earth (step **2604**).

Process **2600** can reduce the coordinates of all points falling within a given spatial bin to a single shared identifying key value according to a deterministic function, wherein the origin coordinates and destination coordinates of the vehicle are translated into a key value to retrieve geofence boundaries associated with the spatial bin that maps to that key value in a lookup-optimized data structure (step **2606**).

When the origin and destination coordinates are received, process **2600** determines whether they are in the same bin (step **2608**). Responsive to a determination that the origin coordinates and destination coordinates are located within a single spatial, process **2600** tests only geofence boundaries within that spatial bin for intersection with the path of the vehicle.

Responsive to a determination that the origin coordinates and destination coordinates are located in different spatial bins, process **2600** tests all boundaries of all geofenced areas for intersection with the path of the vehicle (step **2612**). Process **2600** then ends.

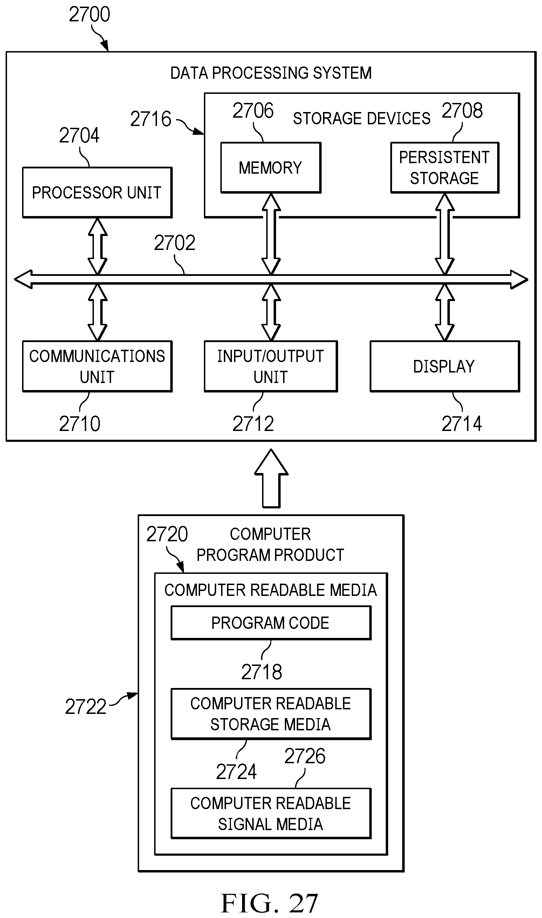

Turning now to **Figure 27,** an illustration of a block diagram of a data processing system is depicted in accordance with an illustrative embodiment. Data processing system **2700** may be used to implement server computer **104** and server computer **106** and client devices **110** in **Figure 1,** as well as computer system **260** in **Figure 2.** In this illustrative example, data processing system **2700** includes communications framework **2702,** which provides communications between processor unit **2704,** memory **2706,** persistent storage **2708,** communications unit **2710,** input/output unit **2712,** and display **2714.** In this example, communications framework **2702** may take the form of a bus system.

Processor unit **2704** serves to execute instructions for software that may be loaded into memory **2706.** Processor unit **2704** may be a number of processors, a multi-processor core, or some other type of processor, depending on the particular implementation. In an embodiment, processor unit **2704** comprises one or more conventional general-purpose central processing units (CPUs). In an alternate embodiment, processor unit **2704** comprises one or more graphical processing units (GPUs).

Memory **2706** and persistent storage **2708** are examples of storage devices **2716.** A storage device is any piece of hardware that is capable of storing information, such as, for example, without limitation, at least one of data, program code in functional form, or other suitable information either on a temporary basis, a permanent basis, or both on a temporary basis and a permanent basis. Storage devices **2716** may also be referred to as computer-readable storage devices in these illustrative examples. Memory **2706,** in these examples, may be, for example, a random access memory or any other suitable volatile or non-volatile storage device. Persistent storage **2708** may take various forms, depending on the particular implementation.

For example, persistent storage **2708** may contain one or more components or devices. For example, persistent storage **2708** may be a hard drive, a flash memory, a rewritable optical disk, a rewritable magnetic tape, or some combination of the above. The media used by persistent storage **2708** also may be removable. For example, a removable hard drive may be used for persistent storage **2708.** Communications unit **2710,** in these illustrative examples, provides for communications with other data processing systems or devices. In these illustrative examples, communications unit **2710** is a network interface card.

Input/output unit **2712** allows for input and output of data with other devices that may be connected to data processing system **2700.** For example, input/output unit **2712** may provide a connection for user input through at least one of a keyboard, a mouse, or some other suitable input device. Further, input/output unit **2712** may send output to a printer. Display **2714** provides a mechanism to display information to a user.

Instructions for at least one of the operating system, applications, or programs may be located in storage devices **2716,** which are in communication with processor unit **2704** through communications framework **2702.** The processes of the different embodiments may be performed by processor unit **2704** using computer-implemented instructions, which may be located in a memory, such as memory **2706.**

These instructions are referred to as program code, computer-usable program code, or computer-readable program code that may be read and executed by a processor in processor unit **2704.** The program code in the different embodiments may be embodied on different physical or computer-readable storage media, such as memory **2706** or persistent storage **2708.**

Program code **2718** is located in a functional form on computer-readable media **2720** that is selectively removable and may be loaded onto or transferred to data processing system **2700** for execution by processor unit **2704.** Program code **2718** and computer-readable media **2720** form computer program product **2722** in these illustrative examples. In one example, computer-readable media **2720** may be computer-readable storage media **2724** or computer-readable signal media **2726.**

In these illustrative examples, computer-readable storage media **2724** is a physical or tangible storage device used to store program code **2718** rather than a medium that propagates or transmits program code **2718.** Computer readable storage media **2724,** as used herein, is not to be construed as being transitory signals *per se,* such as radio waves or other freely propagating electromagnetic waves, electromagnetic waves propagating through a waveguide or other transmission media (e.g., light pulses passing through a fiber-optic cable), or electrical signals transmitted through a wire, as used herein, is not to be construed as being transitory signals *per se,* such as radio waves or other freely propagating electromagnetic waves, electromagnetic waves propagating through a waveguide or other transmission media (e.g., light pulses passing through a fiber-optic cable), or electrical signals transmitted through a wire.

Alternatively, program code **2718** may be transferred to data processing system **2700** using computer-readable signal media **2726.** Computer-readable signal media **2726** may be, for example, a propagated data signal containing program code **2718.** For example, computer-readable signal media **2726** may be at least one of an electromagnetic signal, an optical signal, or any other suitable type of signal. These signals may be transmitted over at least one of communications links, such as wireless communications links, optical fiber cable, coaxial cable, a wire, or any other suitable type of communications link.

The different components illustrated for data processing system **2700** are not meant to provide architectural limitations to the manner in which different embodiments may be implemented. The different illustrative embodiments may be implemented in a data processing system including components in addition to or in place of those illustrated for data processing system **2700.** Other components shown in **Figure 27** can be varied from the illustrative examples shown. The different embodiments may be implemented using any hardware device or system capable of running program code **2718.**

As used herein, "a number of," when used with reference to items, means one or more items. For example, "a number of different types of networks" is one or more different types of networks.

Further, the phrase "at least one of," when used with a list of items, means different combinations of one or more of the listed items can be used, and only one of each item in the list may be needed. In other words, "at least one of" means any combination of items and number of items may be used from the list, but not all of the items in the list are required. The item can be a particular object, a thing, or a category.

For example, without limitation, "at least one of item A, item B, or item C" may include item A, item A and item B, or item B. This example also may include item A, item B, and item C or item B and item C. Of course, any combinations of these items can be present. In some illustrative examples, "at least one of" can be, for example, without limitation, two of item A; one of item B; and ten of item C; four of item B and seven of item C; or other suitable combinations.

The flowcharts and block diagrams in the different depicted embodiments illustrate the architecture, functionality, and operation of some possible implementations of apparatuses and methods in an illustrative embodiment. In this regard, each block in the flowcharts or block diagrams can represent at least one of a module, a segment, a function, or a portion of an operation or step. For example, one or more of the blocks can be implemented as program code, hardware, or a combination of the program code and hardware. When implemented in hardware, the hardware may, for example, take the form of integrated circuits that are manufactured or configured to perform one or more operations in the flowcharts or block diagrams. When implemented as a combination of program code and hardware, the implementation may take the form of firmware. Each block in the flowcharts or the block diagrams may be implemented using special purpose hardware systems that perform the different operations or combinations of special purpose hardware and program code run by the special purpose hardware.

In some alternative implementations of an illustrative embodiment, the function or functions noted in the blocks may occur out of the order noted in the figures. For example, in some cases, two blocks shown in succession may be performed substantially concurrently, or the blocks may sometimes be performed in the reverse order, depending upon the functionality involved. Also, other blocks may be added in addition to the illustrated blocks in a flowchart or block diagram.

The different illustrative examples describe components that perform actions or operations. In an illustrative embodiment, a component may be configured to perform the action or operation described. For example, the component may have a configuration or design for a structure that provides the component with an ability to perform the action or operation that is described in the illustrative examples as being performed by the component.

**Claims**

1. A computer-implemented method (2400) of detecting geofence break events, the method (2400) comprising:

   defining (2402) a geofence boundary (208) according to a triangle (1510) comprising:

   a first segment between a first vertex (Z, 212) at the center of the earth and a second vertex (A+, 214) above the earth's surface;
   a second segment between the first vertex (Z, 212) and a third vertex (B+, 216) above the earth's surface; and
   a third segment between the second and third vertices (A+, 214, B+, 216), wherein the third segment remains above the earth's surface at the segment midpoint;
   wherein the geofence boundary (208) is defined by a first vector (1508) between respective intersection points of the first and second segments with the earth's surface, wherein the first vector (1508) represents a great arc (1504) when projected to the curvature of the earth's surface;

   receiving (2404) origin coordinates (234, C) and destination coordinates (236, D) for a vehicle, wherein a second vector (1506) between the origin coordinates (234, C) and destination coordinates (236, D) represent a great arc (1502) defining a path (1818) of the vehicle when projected to the curvature of the earth's surface;
   determining (2406) whether the second vector (1506) intersects the plane (210) defined by the triangle (1510), wherein an intersection of the plane (210) represents a geofence break; and
   responsive to a determination that the second vector (1506) intersects the plane (210), sending (2408) a geofence break event notice to a number of downstream consumers.

2. The method (2400) of claim 1, wherein the triangle (1510) is one of three or more triangles (1510) that define respective geofence boundaries enclosing a geofenced area (1804) on the earth's surface.

3. The method (2400) of claim 2, further comprising defining a buffer zone (1204) around the geofenced area (1804), wherein the buffer zone (1204) comprises outer boundaries that match the geofenced area (1804) in contour.

4. The method (2400) of claim 3, wherein a geofence break event notice is sent only when the path (1818) of the vehicle intersects both a geofence boundary (208) of the geofenced area (1804) and an outer boundary of the buffer zone (1204).

5. The method (2400) of any of claims 2 to 4, wherein a number of the geofence boundaries fall within multiple spatial bins (1820, 1822, 1824) on the earth's surface, wherein the spatial bins (1820, 1822, 1824) are defined by a global three-dimensional mesh of polyhedrons.

6. The method (2400) of claim 5, further comprising, responsive to a determination that the origin coordinates (234, C) and destination coordinates (236, D) are located within a single spatial bin, testing only geofence boundaries within that spatial bin for intersection with the path (1818) of the vehicle.

7. The method (2400) of claim 5 or claim 6, further comprising, responsive to a determination that the origin coordinates (234, C) and destination coordinates (236, D) are located in different spatial bins (1820, 1822, 1824), testing all geofence boundaries for intersection with the path (1818) of the vehicle.

8. The method (2400) of any of claims 5 to 7, further comprising reducing the coordinates of all points falling within a given spatial bin to a single shared identifying key value according to a deterministic function, wherein the origin coordinates (234, C) and destination coordinates (236, D) of the vehicle are translated into a key value to retrieve geofence boundaries associated with the spatial bin that maps to that key value in a lookup-optimized data structure.

9. The method (2400) of claim 8, further comprising converting the true latitude or longitude into grid normalized latitude or longitude to match the edges of the spatial bins (1820, 1822, 1824) to the curvature of the earth.

10. A system (200) for detecting geofence break events, the system (200) comprising:

a storage device (108) that stores program instructions;
one or more processors operably connected to the storage device (108) and configured to execute the program instructions to cause the system (200) to:
define (2402) a geofence boundary (208) according to a triangle (1510) comprising:

a first segment between a first vertex (Z, 212) at the center of the earth and a second vertex (A+, 214) above the earth's surface;
a second segment between the first vertex (Z, 212) and a third vertex (B+, 216) above the earth's surface; and
a third segment between the second and third vertices, wherein the third segment remains above the earth's surface at the segment midpoint;
wherein the geofence boundary (208) is defined by a first vector (1508) between respective intersection points of the first and second segments with the earth's surface, wherein the first vector (1508) represents a great arc (1504) when projected to the curvature of the earth's surface;

receive (2404) origin coordinates (234, C) and destination coordinates (236, D) for a vehicle, wherein a second vector (1506) between the origin coordinates (234, C) and destination coordinates (236, D) represent a great arc (1502) defining a path (1818) of the vehicle when projected to the curvature of the earth's surface;
determine (2406) whether the second vector (1506) intersects the plane (210) defined by the triangle (1510), wherein an intersection of the plane (210) represents a geofence break; and
responsive to a determination that the second vector (1506) intersects the plane (210), send (2408) a geofence break event notice to a number of downstream consumers.

11. The system (200) of claim 10, wherein the triangle (1510) is one of three or more triangles (1510) that define respective geofence boundaries enclosing a geofenced area (1804) on the earth's surface, wherein the processors further executed instructions to define a buffer zone (1204) around the geofenced area (1804), wherein the buffer zone (1204) comprises outer boundaries that match the geofenced area (1804) in contour, and wherein a geofence break event notice is sent only when the path (1818) of the vehicle intersects both a geofence boundary (208) of the geofenced area (1804) and an outer boundary of the buffer zone (1204).

12. The system (200) of claim 11, wherein a number of the geofence boundaries fall within multiple spatial bins (1820, 1822, 1824) on the earth's surface, wherein the spatial bins (1820, 1822, 1824) are defined by a global three-dimensional mesh of polyhedrons, wherein the processors further executed instructions to, responsive to a determination that the origin coordinates (234, C) and destination coordinates (236, D) are located within a single spatial bin, test only geofence boundaries within that spatial bin for intersection with the path (1818) of the vehicle, and wherein the processors further executed instructions to, responsive to a determination that the origin coordinates (234, C) and destination coordinates (236, D) are located in different spatial bins (1820, 1822, 1824), test all geofence boundaries for intersection with the path (1818) of the vehicle.

13. A computer program product for detecting geofence break events, the computer program product comprising:
a computer-readable storage medium having program instructions embodied thereon to perform the steps of:

defining (2402) a geofence boundary (208) according to a triangle (1510) comprising:

a first segment between a first vertex (Z, 212) at the center of the earth and a second vertex (A+, 214) above the earth's surface;
a second segment between the first vertex (Z, 212) and a third vertex (B+, 216) above the earth's surface; and
a third segment between the second and third vertices, wherein the third segment remains above the earth's surface at the segment midpoint;
wherein the geofence boundary (208) is defined by a first vector (1508) between respective intersection points of the first and second segments with the earth's surface, wherein the first vector (1508) represents a great arc (1504) when projected to the curvature of the earth's surface;

receiving (2404) origin coordinates (234, C) and destination coordinates (236, D) for a vehicle, wherein a second vector (1506) between the origin coordinates (234, C) and destination coordinates (236, D) represent a great arc (1502) defining a path (1818) of the vehicle when projected to the curvature of the earth's surface;
determining (2406) whether the second vector (1506) intersects the plane (210) defined by the triangle (1510), wherein an intersection of the plane (210) represents a geofence break; and
responsive to a determination that the second vector (1506) intersects the plane (210), sending (2408) a geofence break event notice to a number of downstream consumers.

14. The computer program product of claim 13, wherein the triangle (1510) is one of three or more triangles (1510) that define respective geofence boundaries enclosing a geofenced area (1804) on the earth's surface, further comprising instructions for defining a buffer zone (1204) around the geofenced area (1804), wherein the buffer zone (1204) comprises outer boundaries that match the geofenced area (1804) in contour, and wherein a geofence break event notice is sent only when the path (1818) of the vehicle intersects both a geofence boundary (208) of the geofenced area (1804) and an outer boundary of the buffer zone (1204).

15. The computer program product of claim 14, wherein a number of the geofence boundaries fall within multiple spatial bins (1820, 1822, 1824) on the earth's surface, wherein the spatial bins (1820, 1822, 1824) are defined by a global three-dimensional mesh of polyhedrons, further comprising instructions for, responsive to a determination that the origin coordinates (234, C) and destination coordinates (236, D) are located within a single spatial bin, testing only geofence boundaries within that spatial bin for intersection with the path (1818) of the vehicle, and further comprising instructions for, responsive to a determination that the origin coordinates (234, C) and destination coordinates (236, D) are located in different spatial bins (1820, 1822, 1824), testing all geofence boundaries for intersection with the path (1818) of the vehicle.

**Patentansprüche**

1. Computerimplementiertes Verfahren (2400) zum Detektieren von Geofence-Durchbruch-Ereignissen, wobei das Verfahren (2400) Folgendes umfasst:
   Definieren (2402) einer Geofence-Grenze (208) gemäß einem Dreieck (1510), das Folgendes umfasst:

   ein erstes Segment zwischen einem ersten Scheitelpunkt (Z, 212) an dem Erdmittelpunkt und einem zweiten Scheitelpunkt (A+, 214) über der Erdoberfläche;
   ein zweites Segment zwischen dem ersten Scheitelpunkt (Z, 212) und einem dritten Scheitelpunkt (B+, 216) über der Erdoberfläche; und
   ein drittes Segment zwischen dem zweiten und dem dritten Scheitelpunkt (A+, 214, B+, 216), wobei das dritte Segment an dem Segmentmittelpunkt über der Erdoberfläche verbleibt;
   wobei die Geofence-Grenze (208) durch einen ersten Vektor (1508) zwischen jeweiligen Schnittpunkten des ersten und des zweiten Segments mit der Erdoberfläche definiert ist, wobei der erste Vektor (1508) einen großen Bogen (1504) darstellt, wenn er auf die Krümmung der Erdoberfläche projiziert wird;
   Empfangen (2404) von Ursprungskoordinaten (234, C) und Zielkoordinaten (236, D) für ein Fahrzeug, wobei ein zweiter Vektor (1506) zwischen den Ursprungskoordinaten (234, C) und den Zielkoordinaten (236, D) einen großen Bogen (1502) darstellt, der einen Weg (1818) des Fahrzeugs definiert, wenn er auf die Krümmung der Erdoberfläche projiziert wird;
   Bestimmen (2406), ob der zweite Vektor (1506) die Ebene (210) schneidet, die durch das Dreieck (1510) definiert ist, wobei ein Schnitt der Ebene (210) einen Geofence-Durchbruch darstellt; und
   als Reaktion auf eine Bestimmung, dass der zweite Vektor (1506) die Ebene (210) schneidet, Senden (2408) einer Geofence-Durchbruch-Ereignisbenachrichtigung an eine Anzahl von nachgelagerten Verbrauchern.

2. Verfahren (2400) nach Anspruch 1, wobei das Dreieck (1510) eines von drei oder mehr Dreiecken (1510) ist, die jeweilige Geofence-Grenzen definieren, die einen mit einem Geofence versehenen Bereich (1804) auf der Erdoberfläche umschließen.

3. Verfahren (2400) nach Anspruch 2, ferner umfassend Definieren einer Pufferzone (1204) um den mit einem Geofence versehenen Bereich (1804), wobei die Pufferzone (1204) Außengrenzen umfasst, die hinsichtlich der Kontur dem mit einem Geofence versehenen Bereich (1804) entsprechen.

4. Verfahren (2400) nach Anspruch 3, wobei eine Geofence-Durchbruch-Ereignisbenachrichtigung nur gesendet wird, wenn der Weg (1818) des Fahrzeugs sowohl eine Geofence-Grenze (208) des mit einem Geofence versehenen Bereichs (1804) als auch eine Außengrenze der Pufferzone (1204) schneidet.

5. Verfahren (2400) nach einem der Ansprüche 2 bis 4, wobei eine Anzahl der Geofence-Grenzen in mehrere räumliche Behälter (1820, 1822, 1824) auf der Erdoberfläche fällt, wobei die räumlichen Behälter (1820, 1822, 1824) durch ein globales dreidimensionales Netz aus Polyedern definiert sind.

6. Verfahren (2400) nach Anspruch 5, ferner umfassend, als Reaktion auf eine Bestimmung, dass sich die Ursprungskoordinaten (234, C) und die Zielkoordinaten (236, D) innerhalb eines einzelnen räumlichen Behälters befinden, Testen von nur Geofence-Grenzen innerhalb dieses räumlichen Behälters auf Schnitte mit dem Weg (1818) des Fahrzeugs.

7. Verfahren (2400) nach Anspruch 5 oder Anspruch 6, ferner umfassend, als Reaktion auf eine Bestimmung, dass sich die Ursprungskoordinaten (234, C) und die Zielkoordinaten (236, D) in unterschiedlichen räumlichen Behältern (1820, 1822, 1824) befinden, Testen aller Geofence-Grenzen auf Schnitte mit dem Weg (1818) des Fahrzeugs.

8. Verfahren (2400) nach einem der Ansprüche 5 bis 7, ferner umfassend Reduzieren der Koordinaten aller Punkte, die in einen gegebenen räumlichen Behälter fallen, auf einen einzelnen gemeinsamen identifizierenden Schlüsselwert gemäß einer deterministischen Funktion, wobei die Ursprungskoordinaten (234, C) und die Zielkoordinaten (236, D) des Fahrzeugs in einen Schlüsselwert übersetzt werden, um Geofence-Grenzen abzurufen, die dem räumlichen Behälter zugeordnet sind, der in einer nachschlageoptimierten Datenstruktur auf diesen Schlüsselwert abbildet.

9. Verfahren (2400) nach Anspruch 8, ferner umfassend Umwandeln des wahren Breitengrads oder Längengrads in einen gitternormalisierten Breitengrad oder Längengrad, um die Kanten der räumlichen Behälter (1820, 1822, 1824) an die Krümmung der Erde anzupassen.

10. System (200) zum Detektieren von Geofence-Durchbruch-Ereignissen, wobei das System (200) Folgendes umfasst:

   eine Speichervorrichtung (108), die Programmanweisungen speichert;
   einen oder mehrere Prozessoren, die mit der Speichervorrichtung (108) wirkverbunden sind und dazu konfiguriert sind, die Programmanweisungen auszuführen, um das System (200) zu Folgendem zu veranlassen:
   Definieren (2402) einer Geofence-Grenze (208) gemäß einem Dreieck (1510), das Folgendes umfasst:

   ein erstes Segment zwischen einem ersten Scheitelpunkt (Z, 212) an dem Erdmittelpunkt und einem zweiten Scheitelpunkt (A+, 214) über der Erdoberfläche;
   ein zweites Segment zwischen dem ersten Scheitelpunkt (Z, 212) und einem dritten Scheitelpunkt (B+, 216) über der Erdoberfläche; und
   ein drittes Segment zwischen dem zweiten und dem dritten Scheitelpunkt, wobei das dritte Segment an dem Segmentmittelpunkt über der Erdoberfläche verbleibt;
   wobei die Geofence-Grenze (208) durch einen ersten Vektor (1508) zwischen jeweiligen Schnittpunkten des ersten und des zweiten Segments mit der Erdoberfläche definiert ist, wobei der erste Vektor (1508) einen großen Bogen (1504) darstellt, wenn er auf die Krümmung der Erdoberfläche projiziert wird;
   Empfangen (2404) von Ursprungskoordinaten (234, C) und Zielkoordinaten (236, D) für ein Fahrzeug, wobei ein zweiter Vektor (1506) zwischen den Ursprungskoordinaten (234, C) und den Zielkoordinaten (236, D) einen großen Bogen (1502) darstellt, der einen Weg (1818) des Fahrzeugs definiert, wenn er auf die Krümmung der Erdoberfläche projiziert wird;
   Bestimmen (2406), ob der zweite Vektor (1506) die Ebene (210) schneidet, die durch das Dreieck (1510) definiert ist, wobei ein Schnitt der Ebene (210) einen Geofence-Durchbruch darstellt; und
   als Reaktion auf eine Bestimmung, dass der zweite Vektor (1506) die Ebene (210) schneidet, Senden (2408) einer Geofence-Durchbruch-Ereignisbenachrichtigung an eine Anzahl von nachgelagerten Verbrauchern.

11. System (200) nach Anspruch 10, wobei das Dreieck (1510) eines von drei oder mehr Dreiecken (1510) ist, die jeweilige Geofence-Grenzen definieren, die einen mit einem Geofence versehenen Bereich (1804) auf der Erdoberfläche umschließen, wobei die Prozessoren ferner Anweisungen ausgeführt haben, um eine Pufferzone (1204) um den mit einem Geofence versehenen Bereich (1804) zu definieren, wobei die Pufferzone (1204) Außengrenzen umfasst, die hinsichtlich der Kontur dem mit einem Geofence versehenen Bereich (1804) entsprechen, und wobei eine Geofence-Durchbruch-Ereignisbenachrichtigung nur gesendet wird, wenn der Weg (1818) des Fahrzeugs sowohl eine Geofence-Grenze (208) des mit einem Geofence versehenen Bereichs (1804) als auch eine Außengrenze der Pufferzone (1204) schneidet.

12. System (200) nach Anspruch 11, wobei eine Anzahl der Geofence-Grenzen in mehrere räumliche Behälter (1820, 1822, 1824) auf der Erdoberfläche fällt, wobei die räumlichen Behälter (1820, 1822, 1824) durch ein globales dreidimensionales Netz aus Polyedern definiert sind, wobei die Prozessoren ferner Anweisungen ausgeführt haben, um als Reaktion auf eine Bestimmung, dass sich die Ursprungskoordinaten (234, C) und die Zielkoordinaten (236, D) innerhalb eines einzelnen räumlichen Behälters befinden, nur Geofence-Grenzen innerhalb dieses räumlichen Behälters auf Schnitte mit dem Weg (1818) des Fahrzeugs zu testen, und wobei die Prozessoren ferner Anweisungen ausgeführt haben, um als Reaktion auf eine Bestimmung, dass sich die Ursprungskoordinaten (234, C) und die Zielkoordinaten (236, D) in unterschiedlichen räumlichen Behältern (1820, 1822, 1824) befinden, alle Geofence-Grenzen auf Schnitte mit dem Weg (1818) des Fahrzeugs zu testen.

13. Computerprogrammprodukt zum Detektieren von Geofence-Durchbruch-Ereignissen, wobei das Computerprogrammprodukt Folgendes umfasst:

ein computerlesbares Speichermedium, das darauf verkörperte Programmanweisungen aufweist, um die folgenden Schritte durchzuführen:
Definieren (2402) einer Geofence-Grenze (208) gemäß einem Dreieck (1510), das Folgendes umfasst:

ein erstes Segment zwischen einem ersten Scheitelpunkt (Z, 212) an dem Erdmittelpunkt und einem zweiten Scheitelpunkt (A+, 214) über der Erdoberfläche;
ein zweites Segment zwischen dem ersten Scheitelpunkt (Z, 212) und einem dritten Scheitelpunkt (B+, 216) über der Erdoberfläche; und
ein drittes Segment zwischen dem zweiten und dem dritten Scheitelpunkt, wobei das dritte Segment an dem Segmentmittelpunkt über der Erdoberfläche verbleibt;
wobei die Geofence-Grenze (208) durch einen ersten Vektor (1508) zwischen jeweiligen Schnittpunkten des ersten und des zweiten Segments mit der Erdoberfläche definiert ist, wobei der erste Vektor (1508) einen großen Bogen (1504) darstellt, wenn er auf die Krümmung der Erdoberfläche projiziert wird;
Empfangen (2404) von Ursprungskoordinaten (234, C) und Zielkoordinaten (236, D) für ein Fahrzeug, wobei ein zweiter Vektor (1506) zwischen den Ursprungskoordinaten (234, C) und den Zielkoordinaten (236, D) einen großen Bogen (1502) darstellt, der einen Weg (1818) des Fahrzeugs definiert, wenn er auf die Krümmung der Erdoberfläche projiziert wird;
Bestimmen (2406), ob der zweite Vektor (1506) die Ebene (210) schneidet, die durch das Dreieck (1510) definiert ist, wobei ein Schnitt der Ebene (210) einen Geofence-Durchbruch darstellt; und
als Reaktion auf eine Bestimmung, dass der zweite Vektor (1506) die Ebene (210) schneidet, Senden (2408) einer Geofence-Durchbruch-Ereignisbenachrichtigung an eine Anzahl von nachgelagerten Verbrauchern.

14. Computerprogrammprodukt nach Anspruch 13, wobei das Dreieck (1510) eines von drei oder mehr Dreiecken (1510) ist, die jeweilige Geofence-Grenzen definieren, die einen mit einem Geofence versehenen Bereich (1804) auf der Erdoberfläche umschließen, ferner umfassend Anweisungen zum Definieren einer Pufferzone (1204) um den mit einem Geofence versehenen Bereich (1804), wobei die Pufferzone (1204) Außengrenzen umfasst, die hinsichtlich der Kontur dem mit einem Geofence versehenen Bereich (1804) entsprechen, und wobei eine Geofence-Durchbruch-Ereignisbenachrichtigung nur gesendet wird, wenn der Weg (1818) des Fahrzeugs sowohl eine Geofence-Grenze (208) des mit einem Geofence versehenen Bereichs (1804) als auch eine Außengrenze der Pufferzone (1204) schneidet.

15. Computerprogrammprodukt nach Anspruch 14, wobei eine Anzahl der Geofence-Grenzen in mehrere räumliche Behälter (1820, 1822, 1824) auf der Erdoberfläche fällt, wobei die räumlichen Behälter (1820, 1822, 1824) durch ein globales dreidimensionales Netz aus Polyedern definiert sind, ferner umfassend Anweisungen zum, als Reaktion auf eine Bestimmung, dass sich die Ursprungskoordinaten (234, C) und die Zielkoordinaten (236, D) innerhalb eines einzelnen räumlichen Behälters befinden, Testen von nur Geofence-Grenzen innerhalb dieses räumlichen Behälters auf Schnitte mit dem Weg (1818) des Fahrzeugs, und ferner umfassend Anweisungen zum, als Reaktion auf eine Bestimmung, dass sich die Ursprungskoordinaten (234, C) und die Zielkoordinaten (236, D) in unterschiedlichen räumlichen Behältern (1820, 1822, 1824) befinden, Testen aller Geofence-Grenzen auf Schnitte mit dem Weg (1818) des Fahrzeugs.

## Revendications

1. Procédé (2400) de détection d'événements de rupture de géorepérage mis en œuvre par ordinateur, le procédé (2400) comprenant :
la définition (2402) d'une limite de géorepérage (208) selon un triangle (1510) comprenant :

un premier segment entre un premier sommet (Z, 212) au centre de la terre et un deuxième sommet (A+, 214) au-dessus de la surface de la terre ;

un deuxième segment entre le premier sommet (Z, 212) et un troisième sommet (B+, 216) au-dessus de la surface de la terre ; et

un troisième segment entre les deuxième et troisième sommets (A+, 214, B+, 216), dans lequel le troisième segment reste au-dessus de la surface de la terre au niveau du point milieu de segment ;

dans lequel la limite de géorepérage (208) est définie par un premier vecteur (1508) entre des points d'intersection respectifs des premier et deuxième segments avec la surface de la terre, dans lequel le premier vecteur (1508) représente un grand arc (1504) lorsqu'il est projeté sur la courbure de la surface de la terre ;

la réception (2404) de coordonnées d'origine (234, C) et de coordonnées de destination (236, D) pour un véhicule, dans lequel un deuxième vecteur (1506) entre les coordonnées d'origine (234, C) et les coordonnées de destination (236, D) représente un grand arc (1502) définissant une trajectoire (1818) du véhicule lorsqu'il est projeté sur la courbure de la surface de la terre ;

la détermination (2406) du fait que le deuxième vecteur (1506) coupe ou non le plan (210) défini par le triangle (1510), dans lequel une intersection du plan (210) représente une rupture de géorepérage ; et

en réponse à une détermination du fait que le deuxième vecteur (1506) coupe le plan (210), l'envoi (2408) d'une notification d'événement de rupture de géorepérage à un certain nombre de consommateurs en aval.

2. Procédé (2400) selon la revendication 1, dans lequel le triangle (1510) est l'un de trois triangles ou plus (1510) qui définissent des limites de géorepérage respectives entourant une zone géorepérée (1804) sur la surface de la terre.

3. Procédé (2400) selon la revendication 2, comprenant en outre la définition d'une zone tampon (1204) autour de la zone géorepérée (1804), dans lequel la zone tampon (1204) comprend des limites extérieures qui correspondent au contour de la zone géorepérée (1804).

4. Procédé (2400) selon la revendication 3, dans lequel une notification d'événement de rupture de géorepérage est envoyée uniquement lorsque la trajectoire (1818) du véhicule coupe à la fois une limite de géorepérage (208) de la zone géorepérée (1804) et une limite extérieure de la zone tampon (1204).

5. Procédé (2400) selon l'une quelconque des revendications 2 à 4, dans lequel un certain nombre des limites de géorepérage tombent dans de multiples compartiments spatiaux (1820, 1822, 1824) sur la surface de la terre, dans lequel les compartiments spatiaux (1820, 1822, 1824) sont définis par un maillage tridimensionnel global de polyèdres.

6. Procédé (2400) selon la revendication 5, comprenant en outre, en réponse à une détermination du fait que les coordonnées d'origine (234, C) et les coordonnées de destination (236, D) sont situées dans un seul compartiment spatial, le test des seules limites de géorepérage à l'intérieur de ce compartiment spatial pour une intersection avec la trajectoire (1818) du véhicule.

7. Procédé (2400) selon la revendication 5 ou la revendication 6, comprenant en outre, en réponse à une détermination du fait que les coordonnées d'origine (234, C) et les coordonnées de destination (236, D) sont situées dans des compartiments spatiaux (1820, 1822, 1824) différents, le test de toutes les limites de géorepérage pour une intersection avec la trajectoire (1818) du véhicule.

8. Procédé (2400) selon l'une quelconque des revendications 5 à 7, comprenant en outre la réduction des coordonnées de tous les points tombant dans un compartiment spatial donné en une seule valeur clé d'identification partagée selon une fonction déterministe, dans lequel les coordonnées d'origine (234, C) et les coordonnées de destination (236, D) du véhicule sont traduites en une valeur clé pour récupérer des limites de géorepérage associées au compartiment spatial qui se mappe sur cette valeur clé dans une structure de données optimisée pour la recherche.

9. Procédé (2400) selon la revendication 8, comprenant en outre la conversion de la latitude ou longitude réelle en une latitude ou longitude normalisée par grille pour faire correspondre les bords des compartiments spatiaux (1820, 1822, 1824) à la courbure de la terre.

10. Système (200) de détection d'événements de rupture de géorepérage, le système (200) comprenant :

un dispositif de stockage (108) qui stocke des instructions de programme ;
un ou plusieurs processeurs connectés de manière opérationnelle au dispositif de stockage (108) et configurés pour exécuter les instructions de programme pour amener le système (200) à :
définir (2402) une limite de géorepérage (208) selon un triangle (1510) comprenant :

un premier segment entre un premier sommet (Z, 212) au centre de la terre et un deuxième sommet (A+, 214) au-dessus de la surface de la terre ;

un deuxième segment entre le premier sommet (Z, 212) et un troisième sommet (B+, 216) au-dessus de la surface de la terre ; et

un troisième segment entre les deuxième et troisième sommets, dans lequel le troisième segment reste au-dessus de la surface de la terre au niveau du point milieu de segment ;

dans lequel la limite de géorepérage (208) est définie par un premier vecteur (1508) entre des points d'intersection respectifs des premier et deuxième segments avec la surface de la terre, dans lequel le premier vecteur (1508) représente un grand arc (1504) lorsqu'il est projeté sur la courbure de la surface de la terre ;

recevoir (2404) des coordonnées d'origine (234, C) et des coordonnées de destination (236, D) pour un véhicule, dans lequel un deuxième vecteur (1506) entre les coordonnées d'origine (234, C) et les coordonnées de destination (236, D) représente un grand arc (1502) définissant une trajectoire (1818) du véhicule lorsqu'il est projeté sur la courbure de la surface de la terre ;

déterminer (2406) si le deuxième vecteur (1506) coupe le plan (210) défini par le triangle (1510), dans lequel une intersection du plan (210) représente une rupture de géorepérage ; et

en réponse à une détermination du fait que le deuxième vecteur (1506) coupe le plan (210), envoyer (2408) une notification d'événement de rupture de géorepérage à un certain nombre de consommateurs en aval.

11. Système (200) selon la revendication 10, dans lequel le triangle (1510) est un de trois triangles ou plus (1510) qui définissent des limites de géorepérage respectives entourant une zone géorepérée (1804) sur la surface de la terre, dans lequel les processeurs exécutent en outre des instructions pour définir une zone tampon (1204) autour de la zone géorepérée (1804), dans lequel la zone tampon (1204) comprend des limites extérieures qui correspondent au contour de la zone géorepérée (1804), et dans lequel une notification d'événement de rupture de géorepérage est envoyée uniquement lorsque la trajectoire (1818) du véhicule coupe à la fois une limite de géorepérage (208) de la zone géorepérée (1804) et une limite extérieure de la zone tampon (1204).

12. Système (200) selon la revendication 11, dans lequel un certain nombre des limites de géorepérage tombent dans de multiples compartiments spatiaux (1820, 1822, 1824) sur la surface de la terre, dans lequel les compartiments spatiaux (1820, 1822, 1824) sont définis par un maillage tridimensionnel global de polyèdres, dans lequel les processeurs exécutent en outre des instructions pour, en réponse à une détermination du fait que les coordonnées d'origine (234, C) et les coordonnées de destination (236, D) sont situées dans un seul compartiment spatial, tester les seules limites de géorepérage à l'intérieur de ce compartiment spatial pour une intersection avec la trajectoire (1818) du véhicule, et dans lequel les processeurs exécutent en outre des instructions pour, en réponse à une détermination du fait que les coordonnées d'origine (234, C) et les coordonnées de destination (236, D) sont situées dans des compartiments spatiaux (1820, 1822, 1824) différents, tester toutes les limites de géorepérage pour une intersection avec la trajectoire (1818) du véhicule.

13. Produit de programme informatique pour détecter des événements de rupture de géorepérage, le produit de programme informatique comprenant :

un support de stockage lisible par ordinateur sur lequel sont incorporées des instructions de programme pour réaliser les étapes consistant à :

la définition (2402) d'une limite de géorepérage (208) selon un triangle (1510) comprenant :

un premier segment entre un premier sommet (Z, 212) au centre de la terre et un deuxième sommet (A+, 214) au-dessus de la surface de la terre ;

un deuxième segment entre le premier sommet (Z, 212) et un troisième sommet (B+, 216) au-dessus de la surface de la terre ; et

un troisième segment entre les deuxième et troisième sommets, dans lequel le troisième segment reste au-dessus de la surface de la terre au niveau du point milieu de segment ;

dans lequel la limite de géorepérage (208) est définie par un premier vecteur (1508) entre des points d'intersection respectifs des premier et deuxième segments avec la surface de la terre, dans lequel le premier vecteur (1508) représente un grand arc (1504) lorsqu'il est projeté sur la courbure de la surface de la terre ;

la réception (2404) de coordonnées d'origine (234, C) et de coordonnées de destination (236, D) pour un véhicule, dans lequel un deuxième vecteur (1506) entre les coordonnées d'origine (234, C) et les coordonnées de destination (236, D) représente un grand arc (1502) définissant une trajectoire (1818) du véhicule lorsqu'il est projeté sur la courbure de la surface de la terre ;

la détermination (2406) du fait que le deuxième vecteur (1506) coupe ou non le plan (210) défini par le triangle (1510), dans lequel une intersection du plan (210) représente une rupture de géorepérage ; et
en réponse à une détermination du fait que le deuxième vecteur (1506) coupe le plan (210), l'envoi (2408) d'une notification d'événement de rupture de géorepérage à un certain nombre de consommateurs en aval.

14. Produit de programme informatique selon la revendication 13, dans lequel le triangle (1510) est l'un de trois triangles ou plus (1510) qui définissent des limites de géorepérage respectives entourant une zone géorepérée (1804) sur la surface de la terre, comprenant en outre des instructions pour définir une zone tampon (1204) autour de la zone géorepérée (1804), dans lequel la zone tampon (1204) comprend des limites extérieures qui correspondent au contour de la zone géorepérée (1804), et dans lequel une notification d'événement de rupture de géorepérage est envoyée uniquement lorsque la trajectoire (1818) du véhicule coupe à la fois une limite de géorepérage (208) de la zone géorepérée (1804) et une limite extérieure de la zone tampon (1204).

15. Produit de programme informatique selon la revendication 14, dans lequel un certain nombre des limites de géorepérage tombent dans de multiples compartiments spatiaux (1820, 1822, 1824) sur la surface de la terre, dans lequel les compartiments spatiaux (1820, 1822, 1824) sont définis par un maillage tridimensionnel global de polyèdres, comprenant en outre des instructions pour, en réponse à une détermination du fait que les coordonnées d'origine (234, C) et les coordonnées de destination (236, D) sont situées dans un seul compartiment spatial, tester les seules limites de géorepérage à l'intérieur de ce compartiment spatial pour une intersection avec la trajectoire (1818) du véhicule, et comprenant en outre des instructions pour, en réponse à une détermination du fait que les coordonnées d'origine (234, C) et les coordonnées de destination (236, D) sont situées dans des compartiments spatiaux (1820, 1822, 1824) différents, tester toutes les limites de géorepérage pour une intersection avec la trajectoire (1818) du véhicule.

FIG. 1

# FIG. 2

260

**COMPUTER SYSTEM**

**TRACKING AND GEOFENCE SYSTEM** <u>200</u>

**GEOFENCED AREAS** <u>202</u>

**GEOFENCED AREA** <u>204</u>

**GEOFENCE BOUNDARIES** <u>206</u>

**GEOFENCE BOUNDARY** <u>208</u>

**TRIANGULAR PLANE** <u>210</u>

212 — FIRST VERTEX AT EARTH CENTER

214 — SECOND VERTEX ABOVE EARTH

216 — THIRD VERTEX ABOVE EARTH

BUFFER ZONE <u>218</u> | OUTER BOUNDARIES <u>220</u>

**LOOKUP-OPTIMIZED DATA STRUCTURE**

<u>252</u> KEY VALUES

<u>254</u> KEY VALUE 258

— 256

ASSOCIATED GEOFENCE BOUNDARIES | ASSOCIATED SPATIAL BIN

**GLOBAL VOLUME MESH** <u>222</u>

**SPATIAL BINS** <u>224</u>

**POLYHEDRONS** <u>226</u>

**EDGES** <u>228</u>

TRIANGULAR FACES

230

**POSITION DATA POINTS**

ORIGIN COORDINATES | DESTINATION COORDINATES

234 | TIMESTAMPS 238 | 236

**SIMPLIFIED 4D HYPERSPACE PATH** <u>240</u>

**HYPERSPACE TOLERANCE RADIUS** <u>242</u>

**POSITIONAL TOLERANCE** <u>244</u>

TIME SCALING COEFFICIENTS — 246

CONSTANT WIDTH — 248

250  262 — PROCESSOR UNITS  PROGRAM CODE — 264  232

25

300

FIG. 3

GROUP OF POSITIONS
THAT APPEAR COLINEAR

FIG. 4

FIG. 5

FIG. 6

FIG. 7

# FIG. 8

29

FIG. 9

FIG. 10

FIG. 11

FIG. 12

FIG. 13

OUTER BUFFER
INGRESS/EGRESS ARE
REVERSIBLE WITHOUT
CREATING EVENTS

OUTSIDE
1402

OUTER BUFFER
EGRESS EVENT
TRIGGERS HIGH
LEVEL EXIT EVENT

IN BUFFER
ENTERING
1406

IN BUFFER
EXITING
1408

INNER BUFFER
INGRESS EVENT
TRIGGERS HIGH
LEVEL ENTRY EVENT

INSIDE
1404

INNER BUFFER
INGRESS/EGRESS ARE
REVERSIBLE WITHOUT
CREATING EVENTS

FIG. 14

FIG. 15A

FIG. 15B

GEOFENCE
1200

1600

1602

FIG. 16

EP 4 576 840 B1

FIG. 17B

FIG. 17A

FIG. 18A

FIG. 18B

EP 4 576 840 B1

FIG. 19A

FIG. 19B

FIG. 19C

FIG. 20

WHEN PROJECTED TO SURFACE,
THESE MESHES DO NOT AGREE

2004

1900

2002

EP 4 576 840 B1

FIG. 21

EP 4 576 840 B1

EP 4 576 840 B1

LAT

LON

2102

2102

FIG. 22A

FIG. 22B

FIG. 22C

2300

START

2302 — RECEIVE A FIRST SET OF POSITION DATA POINTS FROM A VEHICLE, WHEREIN THE SET INCLUDES A FIRST DATA POINT AND A LAST DATA POINT, AND WHEREIN EACH DATA POINT INCLUDES A RESPECTIVE TIMESTAMP

2304 — SIMPLIFY A PATH FOR THE VEHICLE IN FOUR-DIMENSIONAL HYPERSPACE FROM THE ORIGINAL SET OF POSITION DATA POINTS ACCORDING TO THE RAMER-DOUGLAS-PEUCKER ALGORITHM, WHEREIN POSITIONS ARE CONVERTED TO THREE-DIMENSION CARTESIAN XYZ COORDINATES ON A SPHERE WITH THE TIMESTAMP COMPRISING THE FOURTH DIMENSIONAL COORDINATE, AND WHEREIN THE SIMPLIFIED PATH COMPRISES A REDUCED SET OF POSITION DATA POINTS THAT DESCRIBE A MINIMUM CONTIGUOUS PATH OF LINE SEGMENTS BETWEEN THE FIRST DATA POINT AND LAST DATA POINT SUCH THAT ALL OTHER POSITION DATA POINTS FROM THE ORIGINAL SET SATISFY A PROXIMITY CRITERION WITH REGARD TO THE MINIMUM CONTIGUOUS PATH OF LINE SEGMENTS, AND WHEREIN THE REDUCED SET OF POSITION DATA POINTS REPRESENTS THE ORIGINAL SET OF POSITION DATA POINTS WITHIN A SPECIFIED HYPERSPACE TOLERANCE AND HAS A LOWER TRANSMISSION BANDWIDTH REQUIREMENT THAN THE ORIGINAL SET OF POSITION DATA POINTS

2306 — APPLY A TIME SCALING COEFFICIENT TO THE PROXIMITY CRITERION TO PROVIDE VELOCITY-DEPENDENT CORRECTION SUCH THAT PROJECTION OF THE HYPERSPACE TOLERANCE INTO CARTESIAN SPATIAL DIMENSIONS X,Y,Z REMAINS A SPHERE OF CONSTANT TOLERANCE RADIUS FOR ANY GIVEN VALE OF TIME ACROSS CHANGES IN VELOCITY OF THE VEHICLE

2308 — TRANSMIT THE REDUCED SET OF POSITION DATA POINTS TO A NUMBER OF USERS

END

FIG. 23

2400

START

2402 — DEFINE A GEOFENCE BOUNDARY ACCORDING TO A TRIANGLE COMPRISING: A FIRST SEGMENT BETWEEN A FIRST VERTEX AT THE CENTER OF THE EARTH AND A SECOND VERTEX ABOVE THE EARTH'S SURFACE; A SECOND SEGMENT BETWEEN THE FIRST VERTEX AND A THIRD VERTEX ABOVE THE EARTH'S SURFACE; AND A THIRD SEGMENT BETWEEN THE SECOND AND THIRD VERTICES, WHEREIN THE THIRD SEGMENT REMAINS ABOVE THE EARTH'S SURFACE AT THE SEGMENT MIDPOINT; WHEREIN THE GEOFENCE BOUNDARY IS DEFINED BY A FIRST VECTOR BETWEEN RESPECTIVE INTERSECTION POINTS OF THE FIRST AND SECOND SEGMENTS WITH THE EARTH'S SURFACE, WHEREIN THE FIRST VECTOR REPRESENTS A GREAT ARC WHEN PROJECTED TO THE CURVATURE OF THE EARTH'S SURFACE

2404 — RECEIVE ORIGIN COORDINATES AND DESTINATION COORDINATES FOR A VEHICLE, WHEREIN A SECOND VECTOR BETWEEN THE ORIGIN COORDINATES AND DESTINATION COORDINATES REPRESENT A GREAT ARC DEFINING A PATH OF THE VEHICLE WHEN PROJECTED TO THE CURVATURE OF THE EARTH'S SURFACE

DOES PATH INTERSECT TRIANGULAR PLANE?

2406

NO → NO GEOFENCE BREAK

2410

YES

2408 — SEND A GEOFENCE BREAK EVENT NOTICE TO A NUMBER OF DOWNSTREAM CONSUMERS

END

FIG. 24

2500

START

2502 — DEFINE A BUFFER ZONE AROUND THE GEOFENCED AREA, WHEREIN THE BUFFER ZONE COMPRISES OUTER BOUNDARIES THAT MATCH THE GEOFENCED AREA IN CONTOUR

2504 — INTERSECT GEOFENCE BOUNDARY AND BUFFER OUTER BOUNDARY?

NO — NO GEOFENCE BREAK EVENT

2506

YES

2508 — GEOFENCE BREAK EVENT

END

FIG. 25

2600

START

2602 — ORGANIZE THE EARTH'S SURFACE INTO A GLOBAL 3D MESH OF POLYHEDRAL SPATIAL BINS, WHEREIN A NUMBER OF GEOFENCE BOUNDARIES FALL WITHIN MULTIPLE SPATIAL BINS

2604 — CONVERT THE TRUE LATITUDE OR LONGITUDE INTO GRID NORMALIZED LATITUDE OR LONGITUDE TO MATCH THE EDGES OF THE SPATIAL BINS TO THE CURVATURE OF THE EARTH

2606 — REDUCE THE COORDINATES OF ALL POINTS FALLING WITHIN A GIVEN SPATIAL BIN TO A SINGLE SHARED IDENTIFYING KEY VALUE ACCORDING TO A DETERMINISTIC FUNCTION, WHEREIN THE ORIGIN COORDINATES AND DESTINATION COORDINATES OF THE VEHICLE ARE TRANSLATED INTO A KEY VALUE TO RETRIEVE GEOFENCE BOUNDARIES ASSOCIATED WITH THE SPATIAL BIN THAT MAPS TO THAT KEY VALUE IN A LOOKUP-OPTIMIZED DATA STRUCTURE

ORIGIN AND DESTINATION IN SAME BIN? — NO

2608

YES

2610 — TEST ONLY GEOFENCE BOUNDARIES WITHIN THAT SPATIAL BIN FOR INTERSECTION WITH THE PATH OF THE VEHICLE

TEST ALL BOUNDARIES OF ALL GEOFENCE BOUNDARIES FOR INTERSECTION WITH THE PATH OF THE VEHICLE

2612

END

FIG. 26

2700

## DATA PROCESSING SYSTEM

2716

2706 STORAGE DEVICES 2708

| MEMORY | | PERSISTENT STORAGE |

2704

PROCESSOR UNIT

2702

| COMMUNICATIONS UNIT | INPUT/OUTPUT UNIT | DISPLAY |

2710          2712          2714

2720 COMPUTER PROGRAM PRODUCT

COMPUTER READABLE MEDIA

PROGRAM CODE

2718

COMPUTER READABLE STORAGE MEDIA

2722

2724     2726

COMPUTER READABLE SIGNAL MEDIA

FIG. 27

**EP 4 576 840 B1**

**Patent documents cited in the description**

- US 11526536 B
- US 2011148635 A

- US 7564404 B